# EUROPÄISCHE PATENTSCHRIFT

(11) **EP 3 366 985 B1**
(45) Veröffentlichungstag und Bekanntmachung des Hinweises auf die Patenterteilung: **09.10.2019**
(21) Anmeldenummer: 18151330.0
(22) Anmeldetag: 12.01.2018
(51) Int. Cl.: F21S 45/00

(54) **FAHRZEUGSCHEINWERFER MIT EINEM KABELKANAL UND HERSTELLUNGSVERFAHREN DAFÜR**
VEHICLE HEADLAMP WITH A CABLE CHANNEL AND PRODUCTION METHOD FOR PRODUCING THE SAME
PHARE DE VÉHICULE POURVU D'UN CANAL À CÂBLES ET PROCÉDÉ DE FABRICATION CORRESPONDANT

(30) Priorität: 23.02.2017 AT 501462017
(43) Veröffentlichungstag der Anmeldung: 29.08.2018
(73) Patentinhaber: ZKW Group GmbH, 3250 Wieselburg (AT)
(72) Erfinder: Hungendorfer, Martin, 3642 Häusling/Dunkelsteinerwald (AT); Jackl, Christian, 3250 Wieselburg (AT)
(74) Vertreter: Patentanwaltskanzlei Matschnig & Forsthuber OG

(56) Entgegenhaltungen:
- EP-A1- 2 266 845
- DE-A1-102005 046 194
- DE-A1-102012 106 408
- DE-U1-202013 101 944
- FR-A3- 2 909 512
- JP-A- H09 322 356
- JP-A- 2002 330 519
- JP-A- 2007 143 212

## Beschreibung

Die Erfindung betrifft einen Fahrzeugscheinwerfer, der einen Kabelkanal, welcher eine vordefinierte Form entsprechend einem Verlauf innerhalb des Fahrzeugscheinwerfers aufweist, umfasst, wobei der Kabelkanal zumindest zwei entlang einer Längsrichtung verlaufende Kabelbahnen, die sich jeweils in Längsrichtung zwischen zwei Bahnenden erstrecken, umfasst und jede Kabelbahn quer zu ihrer Längsrichtung einen im Wesentlichen U-förmigen Querschnitt, der durch zwei Schenkel und eine Basis gebildet ist, wobei die Schenkel über die Basis miteinander verbunden sind und die Schenkel jeweils offene Schenkelenden aufweisen.

Außerdem betrifft die Erfindung ein Herstellungsverfahren für einen Fahrzeugscheinwerfer mit einem Kabelkanal.

Moderne Fahrzeugscheinwerfer enthalten vermehrt eine immer größer werdende Anzahl von Elektronik-Baugruppen oder Leuchteinheiten, die miteinander verbunden werden müssen, um für ihre jeweilige Funktion betriebsfähig zu werden. Dabei werden die zur Verbindung der Komponenten benötigten Leitungen beziehungsweise Kabelverbindungen häufig lose innerhalb des Fahrzeugscheinwerfers verlegt. Allgemein sind Kabelkanäle zur Führung von Leitungen bekannt.

Ein Kabelkanal nach dem Stand der Technik ist ein System für die Verlegung elektrischer Leitungen. Kabelkanäle werden häufig dazu verwendet, um mehrere Kabel oder Leitungen in einem gemeinsamen Verlegeweg anzuordnen. Der Kabelkanal dient dem Schutz und der mechanischen Entlastung der Leitungen, aber auch um die Betriebssicherheit durch Vermeiden andernfalls frei liegender Leitungen zu erhöhen. Unter einem Kabelkanal wird hierin auch eine Kabelführung oder ein Kabelschacht verstanden.

DE 20 2013 101 944 U1 offenbart einen gattungsgemäßen Fahrzeugscheinwerfer mit einem Kabelkanal.

Bei der Montage werden häufig Kunststoff-Kabelkanäle zuerst an den Montageort, beispielsweise eine Wand, geschraubt oder geklebt. Zusätzlich können dabei starre Verbindungselemente und starre Eckstücke eingesetzt werden, um einen Verlauf für die Kabelführung zu bilden. Danach werden die Leitungen in den Kabelkanal gelegt. Zu diesem Zweck wird häufig, wenn der Kabelkanal nicht mit einer abnehmbaren Abdeckung versehen ist, zuerst eine sogenannte "Feder" in den Kabelkanal eingeführt, um anschließend die Kabel, an dieser Feder befestigt, durchziehen zu können. Zur Herausführung von einzelnen Kabeln aus dem Kabelbaum muss der Kabelkanal an bestimmten Stellen entsprechende Unterbrechungen aufweisen. Es ist schwierig, den Einlegevorgang selbst unter Zuhilfenahme einer Feder durchzuführen.

Bei Kabelkanälen tritt zudem das Problem auf, dass die eingelegten Kabel lose im Kanal liegen, was beispielsweise im automobilen Umfeld unerwünscht ist. Es besteht zwar die Möglichkeit, die Kabel mit Kabelbindern im Kabelkanal zu fixieren, jedoch gehen damit mehrere Nachteile einher. So kann die Verbindung nicht wieder zerstörungsfrei gelöst werden, um beispielsweise nachträglich ein weiteres Kabel einzuziehen. Ferner ist dieser Montagevorgang schwierig zu automatisieren und erfordert eine lange Montagezeit.

Die Kabelbündel können aber auch durch Filmscharniere oder Kabelklammern in Form von gesonderten Bauteilen befestigt werden, die diese umklammern. Jedoch ist dabei eine komplexe Abstimmung notwendig, die an eine Kabel-Konfiguration gebunden ist. Ferner muss das Material entsprechend gewählt werden, was den Preis ungünstig beeinflussen kann und außerdem die Werkzeugkomplexität erhöht. Insgesamt ist diese Variante anfällig für Schwankungen bei der Serienproduktion entsprechender Kabelkanäle, wobei beispielsweise das Filmscharnier häufiger abreißen kann. Kabelklammern erfordern häufig einen zusätzlichen Montageschritt.

Ein anderer bekannter Lösungsansatz beinhaltet Spiralschläuche zur Führung von einem oder mehreren Kabel oder Leitungen. Diese weisen jedoch nur eine sehr geringe mechanische Eigenstabilität auf, insbesondere in Richtung der Längserstreckung, und können folglich die Leitungen nur eingeschränkt schützen. Sie dienen eher zum Zusammenhalten mehrerer Leitungen, als das Freiliegen von Leitungen zu vermeiden. Jedoch liegen große Teile der Oberfläche der innenliegenden Leitungen frei zugänglich und sind daher nur eingeschränkt geschützt. Bei einem Spiralschlauch ist das Einziehen der Kabel, insbesondere bei längeren Kabeln, nicht trivial, sondern erfordert eine Feder oder einen hohen mechanischen Aufwand bei der Umwicklung der Kabel. Kabelabzweigungen aus dem Kabelbaum sind schwierig zu realisieren.

Derzeit werden gesonderte Kabelkanäle oder Spiralschläuche im Automobilbau kaum eingesetzt. Natürlich können Teile der Karosserie dafür genützt werden, um im Sinne eines Kabelkanals Leitungen zu führen. Gesonderte Kabelkanäle, das heißt solche, die als separate Komponenten nur zu diesem Zweck in ein Fahrzeug eingebaut werden, sind nicht sehr verbreitet, da mit jedem zusätzlichen Kabelkanal ein höheres Gewicht einhergeht. Daher werden häufig konfektionierte Kabelbäume eingesetzt. Bei konfektionierten Kabelbäumen ist es jedoch notwendig, dass die beispielsweise die elektrische Konfiguration der Komponenten in einem Kraftfahrzeug feststeht und folglich nahezu für jede Variation der Konfiguration der Komponenten ein spezifischer Kabelbaum benötigt wird. Bei zunehmender Komplexität der Kraftfahrzeuge, beispielsweise durch eine Vielzahl an Assistenzsystemen, Entertainmentsystemen oder Sicherheitssystemen ist es häufig nötig eine große Anzahl unterschiedlicher Kabelbäume für ein Fahrzeug zu entwickeln. Folglich ist es notwendig Möglichkeiten, den Kabelbaum im Fahrzeug zu verlegen und zu befestigen, zu entwickeln. Dies es deshalb so komplex, da die Anzahl der Leitungen oder Kabel, die in einem Kabelbaum zusammengefasst werden, stark variieren kann und der Durchmesser des Kabelbaums, durch den der Querschnitt des Kabelbündels gebildet ist, somit ebenfalls stark variieren kann. All diese Eigenschaften können zu höheren Entwicklungskosten oder Logistikkosten führen.

Kabelkanäle nach dem Stand der Technik werden häufig durch ein Extruder-Verfahren hergestellt. Dabei werden fortlaufende, kontinuierliche Profilstränge erzeugt, wie beispielsweise U-förmige Profile aus Kunststoff zur Verwendung als Kabelkanal. Der Vorteil dabei liegt in der kostengünstigen Herstellung von länglich erstreckten Erzeugnissen. Das Extrudieren ist ein kontinuierliches Verfahren bei dem ein kontinuierlicher Massestrom beispielsweise durch eine Düse geführt wird und anschließend auf einer Kühlstrecke kontrolliert erstarrt wird. Variationen der Geometrie längs der Produktionsrichtung sind allerdings nur sehr eingeschränkt durchführbar und benötigen eigene Arbeitsgänge, was zu hohen Herstellungskosten führt. Es hat sich aber gezeigt, dass Kabelkanäle, die durch das Strangpressverfahren hergestellt sind, für Anwendungen im Automobilbereich zu wenige Freiheitsgrade in deren Formgebung aufweisen, sodass derartige Kabelkanäle in den vielen Fällen nicht für Anwendungen im Automobilbereich geeignet sind.

Es ist die Aufgabe der vorliegenden Erfindung, einen Fahrzeugscheinwerfer mit einem Kabelkanal bereitzustellen, der die genannten Nachteile überwindet und für den Automobilbau geeignet ist.

Die Aufgabe wird durch einen Fahrzeugscheinwerfer mit einem Kabelkanal der eingangs genannten Art gelöst, bei welchem die zumindest zwei Kabelbahnen In Längsrichtung nacheinander anreihbar sind, sodass sie in einer gedachten Verlängerung des im Wesentlichen U-förmigen Querschnitts in Längsrichtung gelegen sind und voneinander durch eine Unterbrechung zumindest der Basis getrennt sind, wodurch sie hinsichtlich der Unterbrechung zueinander einen Abstand in Längsrichtung aufweisen, und die erste Kabelbahn mit der zweiten Kabelbahn an deren einander zugewandten Bahnenden über eine Brücke verbunden ist. Die Brücke vom offenen Schenkelende eines Schenkels der ersten Kabelbahn verläuft zum offenen Schenkelende des schräg gegenüber gelegenen Schenkels der zweiten Kabelbahn. Die Brücke kann eine Breite quer zur Längserstreckung der Brücke aufweisen, die geringer ist als die Länge der Basis oder die Länge der Schenkel. Demzufolge können auch die Schenkel teilweise unterbrochen sein.

Durch die erfindungsgemäße Anordnung wird erreicht, dass die Montage von Kabeln vereinfacht und der Halt der Kabel im Kabelkanal verbessert wird. Zusätzlich können durch Unterbrechungen im Kabelkanal Abzweigungen geschaffen werden, wodurch beispielsweise einzelne Kabel aus einem Kabelbündel oder Kabelstrang zu einem Gerät herausgeführt werden können, ohne dass der Kabelkanal komplett unterbrochen werden muss und ein mehrteiliger Kabelkanal benötigt wird.

Die Erfinder haben außerdem erkannt, dass im Automobilbau in der Regel kurze und geschwungen verlaufende Kabelkanäle benötigt werden, sowie Variationen des Aufbaus längs der Längserstreckung günstig für eine vereinfachte Montage genutzt werden können. Deshalb sind in Vergleich zu konventionellen Extrusions-Verfahren alternative Herstellungsverfahren besonders gut geeignet, wie beispielsweise das Spritzgussverfahren oder das 3D-Druckverfahren. Ferner kann bei einer Verwendung eines Kabelkanals innerhalb eines Scheinwerfers auf eine Abdeckung des Kabelkanals verzichtet werden, da der Scheinwerfer in vielen Fällen ein weitgehend dichtes Gehäuse aufweist und die Kabel nicht gegen übermäßige Feuchtigkeit und aggressive Substanzen, wie beispielsweise Salzlake geschützt werden müssen, wie es beispielsweise bei einem Kabelkanal, der im Motorraum eines Fahrzeugs angeordnet ist, erforderlich sein kann. Durch einen erfindungsgemäßen Kabelkanal kann dieser darauf optimiert werden, nur eine Kabelführung mit einer einfachen Montage des Kabelkanals bereitzustellen, wobei der Schutz gegenüber Verschmutzung und mechanischen Kräften eine eher untergeordnete Rolle spielen kann. Dadurch können Kostenvorteile erzielt werden.

Gemäß der Erfindung wird der Kabelkanal in einem Fahrzeugscheinwerfer derart weiterentwickelt, dass die Brücke vom offenen Schenkelende eines Schenkels der ersten Kabelbahn zum offenen Schenkelende des schräg gegenüber gelegen Schenkels der zweiten Kabelbahn verläuft.

Dadurch kann erreicht werden, dass es möglich ist die Leitungen um den Kabelkanal zu schlagen und bei entsprechender Bestückung des Kabelkanals mit Kabeln oder Leitungen einen Formschluss zwischen dem Kabelbündel und dem Kabelkanal zu erzielen, was zu einer Fixierung der Kabel innerhalb des Kabelkanals führt.

In einer speziellen Variante weist jede Kabelbahn quer zu ihrer Längsrichtung einen im Wesentlichen U-förmigen Querschnitt, der durch eine Basis mit zwei Basisenden und einen ersten Schenkel mit zwei Schenkelenden und einen zweiten Schenkel mit zwei Schenkelenden gebildet ist, wobei ein Schenkelende des ersten Schenkels mit einem Schenkelende des zweiten Schenkels jeweils über die Basisenden der Basis verbunden ist, auf.

Mit anderen Worten ist die erste Kabelbahn mit der zweiten Kabelbahn an einem jeweiligen Bahnende über eine Brücke verbunden, wobei die Brücke vom offenen Schenkelende des ersten Schenkels der ersten Kabelbahn zum offenen Schenkelende des zweiten Schenkels der zweiten Kabelbahn oder vom offenen Schenkelende des zweiten Schenkels der ersten Kabelbahn zum offenen Schenkelende des ersten Schenkels der zweiten Kabelbahn verläuft.

Durch den erfindungsgemäßen Fahrzeugscheinwerfer mit einem Kabelkanal kann erreicht werden, dass ein Kabel, ein Kabelbaum oder auch ein loses Kabelbündel vor der Montage beispielsweise in einem Fahrzeug in den Kabelkanal eingelegt werden kann und anschließend das Kabelbündel um die Brücke oder die Brücke um das Kabelbündel geschwungen werden kann. Diese Drehbewegung beim Umwickeln ist besonders einfach ausführbar. Insgesamt kann dadurch der Kabelbaum sehr einfach in den Kabelkanal eingelegt werden, wobei anschließend der Kabelbaum im Kabelkanal vom Boden, den Seitenwänden und einer oder mehreren Brücken umgeben ist und so innerhalb des Kabelkanals gehalten wird.

Die Seitenwände des Kabelkanals bieten guten Schutz beispielsweise gegen mechanische, chemische oder thermische Einwirkungen. Die Brücken sorgen dafür, dass der Kabelbaum nicht aus dem Kabelkanal herausfallen kann. Gleichzeitig ist durch die erfindungsgemäße Unterteilung des Kabelkanals in Kabelbahnen, die durch Brücken miteinander verbunden sind, dafür gesorgt, dass der Kabelbaum in die Kabelbahnen leicht eingelegt werden kann und gleichzeitig der Kabelkanal samt Kabelbaum flexibel bei der Verlegung beispielsweise innerhalb eines Fahrzeugs ist.

In einer ersten Ausführungsform umfasst der erfindungsgemäße Fahrzeugscheinwerfer mit dem Kabelkanal zumindest eine weitere, dritte Kabelbahn, wobei die Kabelbahn quer zu ihrer Längsrichtung einen im Wesentlichen U-förmigen Querschnitt, der durch zwei Schenkel und eine Basis gebildet ist, wobei die Schenkel über die Basis miteinander verbunden sind und die Schenkel jeweils offene Schenkelenden aufweisen, wobei die dritte Kabelbahn in Längsrichtung aneinander anreihbar ist, sodass sie in einer gedachten Verlängerung mit der ersten und zweiten Kabelbahn gelegen ist und die Kabelbahnen dabei untereinander einen Abstand in Längsrichtung aufweisen, und die zweite Kabelbahn mit der dritten Kabelbahn an einem jeweiligen Bahnende über eine zweite Brücke verbunden ist und die zweite Kabelbahn mit der dritten Kabelbahn an einem jeweiligen Bahnende über eine zweite Brücke verbunden ist, die im Wesentlichen parallel zur ersten Brücke orientiert ist.

Mit anderen Worten umfasst der erfindungsgemäße Fahrzeugscheinwerfer mit dem Kabelkanal zumindest eine weitere, dritte Kabelbahn, wobei die Kabelbahn quer zu ihrer Längsrichtung einen im Wesentlichen U-förmigen Querschnitt, der durch eine Basis mit zwei Bahnenden und einen ersten Schenkel mit zwei Bahnenden und einen zweiten Schenkel mit zwei Bahnenden gebildet ist,
wobei ein Bahnende des ersten Schenkels mit einem Bahnende des zweiten Schenkels jeweils über die Bahnenden der Basis verbunden ist, aufweist, wobei die dritte Kabelbahn in Längsrichtung aneinander anreihbar ist, sodass sie in einer gedachten Verlängerung mit der ersten und zweiten Kabelbahn gelegen ist und dabei untereinander einen Abstand in Längsrichtung aufweist, und die zweite Kabelbahn mit der dritten Kabelbahn an einem jeweiligen Bahnende über eine zweite Brücke verbunden ist, wobei
die erste Brücke vom offenen Schenkelende des ersten Schenkels der ersten Kabelbahn zum offenen Schenkelende des zweiten Schenkels der zweiten Kabelbahn verläuft, und die zweite Brücke vom offenen Schenkelende des zweiten Schenkels der zweiten Kabelbahn zum offenen Schenkelende des ersten Schenkels der dritten Kabelbahn verläuft oder
die erste Brücke vom offenen Schenkelende des zweiten Schenkels der ersten Kabelbahn zum offenen Schenkelende des ersten Schenkels der zweiten Kabelbahn verläuft, und die zweite Brücke vom offenen Schenkelende des ersten Schenkels der zweiten Kabelbahn zum offenen Schenkelende des zweiten Schenkels der dritten Kabelbahn.

In dieser Ausführungsform umfasst der erfindungsgemäße Fahrzeugscheinwerfer mit dem Kabelkanal zumindest zwei Brücken, die zwischen drei Kabelbahnen angeordnet sind, wobei die zwei Brücken zwischen den drei Kabelbahnen wechselweise vom offenen Schenkelende des ersten Schenkels der ersten Kabelbahn zum offenen Schenkelende des zweiten Schenkels der zweiten Kabelbahn und vom offenen Schenkelende des ersten Schenkels der zweiten Kabelbahn zum offenen Schenkelende des ersten Schenkels der dritten Kabelbahn verläuft. Dadurch kann erreicht werden, dass die Umwicklung des Kabelbaums durch den Kabelkanal oder die Umwicklung des Kabelkanals durch den Kabelbaum nicht bei jedem Abschnitt des Kabelkanals in der gleichen Drehrichtung erfolgen muss. Folglich kann dadurch eine Vereinfachung beim Einlegen des Kabelbündels in den Kabelkanal stattfinden.

Die Anordnung zweier Brücken kann alternativ auch derart erfolgen, dass
sowohl die erste Brücke, als auch die zweite Brücke vom offenen Schenkelende des ersten Schenkels der ersten Kabelbahn zum offenen Schenkelende des zweiten Schenkels der zweiten Kabelbahn verläuft, oder
sowohl die erste Brücke aus auch die zweite Brücke vom offenen Schenkelende des zweiten Schenkels der ersten Kabelbahn zum offenen Schenkelende des ersten Schenkels der zweiten Kabelbahn verläuft.

Dadurch kann das Kabelbündel insbesondere bei kurzen Kabelkanälen sehr einfach eingelegt werden, da immer die gleiche Handbewegung beim Einlegen erfolgen kann.

Eine besonders günstige Ausführungsform ist gegeben, wenn der Abstand in Längsrichtung der Kabelbahnen größer ist als die Breite der Basis zumindest einer der Kabelbahnen und bevorzugt maximal fünfmal so lang, besonders bevorzugt maximal dreimal so lang als die Breite der Basis zumindest einer der Kabelbahnen ist. Durch einen erfindungsgemäß gewählten Abstand zweier Kabelbahnen ist das Einlegen eines Kabelbaums in den Kabelkanal besonders einfach. Es ist klar, dass bei zwei aufeinanderfolgenden Kabelbahnen einem geplanten Verlegeverlauf des Kabelkanals angepasst sein können und nicht die gleichen Abstände vorhanden sein müssen.

Eine weitere besonders günstige Ausführungsform ist gegeben, wenn die Erstreckung in Längsrichtung zumindest einer der Kabelbahnen zumindest dreimal, bevorzugt zumindest fünfmal so lang, besonders bevorzugt zumindest zehnmal so lang wie die Breite der Basis zumindest einer der Kabelbahnen ist. Durch die erfindungsgemäß gewählte Länge einer der Kabelbahnen ist das Einlegen eines Kabelbaums in den Kabelkanal besonders einfach. Es ist klar, dass zwei aufeinanderfolgende Kabelbahnen einem geplanten Verlegeverlauf des Kabelkanals angepasst sein können und nicht die gleichen Dimensionen aufweisen müssen.

Eine weitere vorteilhafte Ausführungsform ist gegeben, wenn die Schenkel und die Basis zumindest einer der Kabelbahnen im Wesentlichen gleich lang sind, da dadurch eine besonders hohe Stabilität der Anordnung erreicht werden kann. Es ist klar, dass zwei aufeinanderfolgende Kabelbahnen einem geplanten Verlegeverlauf des Kabelkanals angepasst sein können und nicht die gleichen Dimensionen der jeweiligen Schenkel und Basis aufweisen müssen.

In einer bevorzugten Ausführungsform weist zumindest eine der Kabelbahnen in den Seitenwänden die durch die Schenkel mit ihrer Erstreckung in Längsrichtung oder in dem Boden der durch die Basis mit ihrer Erstreckung in Längsrichtung in der jeweiligen Kabelbahn gebildet ist, Löcher, Aussparungen, Befestigungslaschen oder Variationen in der Wandstärke auf. Dadurch kann eine flexible Montagemöglichkeit für Steck- oder Schraubverbindungen geschaffen werden. Außerdem kann Material und Gewicht des Kabelkanals reduziert werden. Es ist klar, dass zwei aufeinanderfolgende Kabelbahnen einem geplanten Verlegeverlauf des Kabelkanals angepasst sein können und nicht die gleichen Seitenflächen aufweisen müssen.

In einer weiteren bevorzugten Ausführungsform verläuft die Brücke in einer Ebene, die parallel zur der Ebene liegt, die durch die Basis zumindest einer der Kabelbahnen und ihrer Erstreckung in Längsrichtung gebildet ist. Dadurch kann erreicht werden, dann der Kabelbaum durch den Kabelkanal umgeben ist und ein Herausfallen des Kabelbaums aus dem Kabelkanal verhindert wird. Es ist klar, dass zwei aufeinanderfolgende Kabelbahnen einem geplanten Verlegeverlauf des Kabelkanals angepasst sein können und nicht die gleichen Brücken aufweisen müssen.

In einer anderen Ausführungsform weist die Brücke eine Breite auf, die kleiner ist als die Basis zumindest einer der Kabelbahnen. Dadurch erhält der Kabelkanal eine gewisse Flexibilität, die eine Montage entlang eines vordefinierten Verlegewegs, beispielsweise in einem Fahrzeug, erleichtert. Es ist klar, dass zwei aufeinanderfolgende Kabelbahnen einem geplanten Verlegeverlauf des Kabelkanals angepasst sein können und nicht die gleichen Brücken aufweisen müssen.

In einer besonders vorteilhaften Ausführungsform des Kabelkanals ist die Brücke mit einer Verlängerung eines Schenkels verbunden, die sich in oder gegen die Längsrichtung zumindest teilweise als Fortsetzung des Schenkels erstreckt, wobei die Verlängerung des Schenkels über das Bahnende des jeweils anderen Schenkels derselben Kabelbahn am selben Bahnende hinaus ragt. Dadurch ist es möglich den Kabelkanal einstückig durch ein Spritzgussverfahren herzustellen, wobei bei der Herstellung kein Schieber benötigt wird, beziehungsweise eine Formgebung ohne Hinterschneidung möglich ist. Dadurch kann der Kabelkanal besonders kostengünstig hergestellt werden.

In einem zweiten Aspekt der Erfindung wird der erfindungsgemäße Fahrzeugscheinwerfer mit dem Kabelkanal derart weiterentwickelt, dass der Kabelkanal zumindest eine Brücke umfasst, die von einem Schenkel der ersten Kabelbahn zu dem in der Verlängerung des Schenkels der ersten Kabelbahn gelegenen Schenkel der zweiten Kabelbahn verläuft und zumindest eine Kabelklemmbrücke vom offenen Schenkelende eines Schenkels der ersten Kabelbahn zum offenen Schenkelende des anderen Schenkels der ersten Kabelbahn verläuft, und dabei vorzugsweise quer zur Längsrichtung verläuft. Dadurch kann erreicht werden, dass der Bereich der Brücke, der die erste mit der zweiten Kabelbahn verbindet dazu verwendet wird, um ein Herausfallen der Kabel oder Leitungen zu verhindern.

Dieser Aspekt kann dadurch weiter verbessert werden, dass die zumindest eine Kabelklemmbrücke einen Brückenvorsprung und einen Brückenflügel umfasst, die gemeinsam die Kabelklemmbrücke bilden, die jedoch unterbrochen werden kann. Die elastischen Eigenschaften des Brückenflügels erlauben diese Unterbrechung. Dabei ist der Brückenflügel quer zur Längsrichtung vorzugsweise länger ist als der Brückenvorsprung, um die Biegbarkeit des Brückenflügels zu verbessern. Dadurch kann erreicht werden, dass Kabel sehr einfach in den Kabelkanal eingebracht werden können, indem die Kabel auf den elastischen Brückenflügel gepresst werden, der unter der Anpresskraft nachgibt und das Kabel in den Kabelkanal eingeführt werden kann. Der Kabelkanal weist an dem Position der Kabelklemmbrücke eine Unterbrechung der Basis des Kabelbahn auf, sodass Kabel auch dann eingelegt werden können, wenn bereits andere Kabel im Kabelkanal liegen, da die Unterbrechung ein Überdrücken der im Kabelkanal befindlichen Kabel erlaubt und Kabel sogar dann noch eingelegt werden können, wenn der Kabelkanal nahezu voll bestückt ist. Bei voller Bestückung kann ein Formschluss zwischen dem Bündel an Kabeln und dem Kabelkanal erreicht werden, sodass das Kabelbündel innerhalb der Kabelkanals fixiert ist. Eine zusätzliche Befestigung, beispielsweise durch Kabelbinder ist somit nicht mehr nötig, was die Montage vereinfacht. Ein zusätzlicher Vorteil ist dadurch gegeben, dass die Anordnung einstückig durch eine Formgebung ohne Hinterschneidung für ein Spritzgussverfahren hergestellt werden kann.

Eine weitere günstige Ausführungsform der Erfindung besteht darin, dass ein individuell angepasster Kabelkanal durch ein 3D-Druckverfahren hergestellt ist. Dadurch ist insbesondere für kleine Stückzahlen, wie sie bei derart individuellen Kabelkanälen durchaus vorkommen können, ein besonders kostengünstiges und flexibles Herstellungsverfahren gegeben.

Dies kann derart erfolgen, dass der Kabelkanal aus einem Kunststoffmaterial, insbesondere teilweise oder vollständig aus zumindest einem thermoplastischen Material, vorzugsweise einem thermoplastischen Terpolymer (z.B. Acrylnitril-Butadien-Styrol-Copolymer, ABS) oder einem thermoplastischen Elastomer, und mittels einem 3D-Druckverfahren hergestellt ist und vorzugsweise verschiedene Materialien für die zumindest zwei Kabelbahnen und die zumindest eine Brücke eingesetzt sind.

3D-Druckverfahren erlauben einen Materialmix während der Herstellung. Folglich können insbesondere die Kanten, das heißt die Stoßstellen von Seitenwänden und Boden, mit einem Material gefertigt werden, das eine erhöhte Festigkeit aufweist. Andererseits können Teile der Flächen der Seitenwände oder des Bodens aus einem besonders leichten Material gefertigt werden, um Gewicht einzusparen. Wird eine Brücke aus einem thermoplastischen Elastomer gefertigt, so weist die Brücke selbst eine erhöhte Elastizität auf und erleichtert weiter die Handhabung eines Kabelkanals.

Alternativ zum 3D-Druckverfahrern kann der erfindungsgemäße Kabelkanal aus einem Kunststoffmaterial, vorzugsweise einem thermoplastischen Terpolymer, und mittels eines Spritzgussverfahrens hergestellt sein. Dadurch kann die erfindungsgemäße Anordnung einfach und kostengünstig durch die vorteilhafte Formgebung hergestellt werden.

Es ist klar, dass aufeinanderfolgende Kabelbahnen in den oben genannten Ausführungsformen beliebig kombiniert werden können, um den erfindungsgemäßen Kabelkanal an einem geplanten Verlegeverlauf anzupassen. Eine individuelle Anpassung erlaubt eine besonders einfache Handhabung beim Einlegen des Kabelbündels in den Kabelkanal und der Montage.

Die Erfindung und deren Vorteile werden im Folgenden anhand einiger nicht einschränkenden Ausführungsbeispielen näher beschrieben, die in den beiliegenden Zeichnungen veranschaulicht sind. Die Zeichnungen zeigen in:
- Fig. 1: einen erfindungsgemäßen Kabelkanal gemäß einer ersten Ausführungsform,
- Fig. 2: einen erfindungsgemäßen Kabelkanal gemäß einer zweiten Ausführungsform,
- Fig. 3: einen erfindungsgemäßen Kabelkanal gemäß einer dritten Ausführungsform,
- Fig. 4: einen erfindungsgemäßen Kabelkanal gemäß einer vierten Ausführungsform,
- Fig. 5: einen Kabelkanal nach Fig. 1, in den Kabel eingelegt sind,
- Fig. 6: einen Kabelkanal nach Fig. 1, in den teilweise Kabel eingelegt sind,
- Fig. 7: einen erfindungsgemäßen Kabelkanal gemäß einer fünften Ausführungsform,
- Fig. 8: einen Querschnitt des Kabelkanals in der Schnittebene A-A der Fig. 7, und
- Fig. 9: schematisch einen erfindungsgemäßen Fahrzeugscheinwerfer mit einem erfindungsgemäßen Kabelkanal.

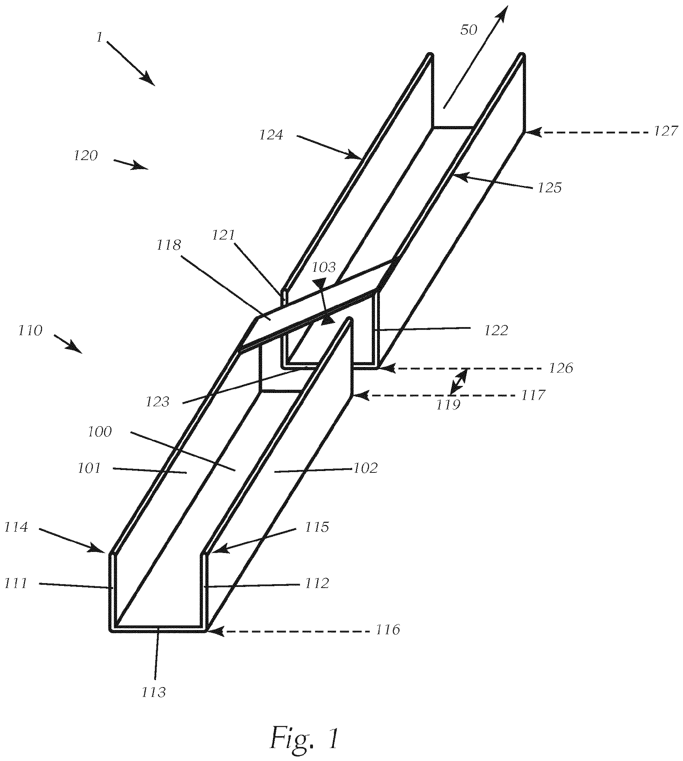

Unter Bezugnahme auf **Fig. 1** bis **Fig. 9** werden nun Ausführungsbeispiele der Erfindung näher erläutert. Insbesondere sind für die Erfindung wichtige Teile dargestellt, wobei klar ist, dass beispielsweise zur Montage viele andere, nicht gezeigte Teile enthalten sein können, die einen sinnvollen Einsatz beispielsweise in einem Kraftfahrzeug, wie insbesondere einem PKW oder Motorrad, ermöglichen. Der Übersichtlichkeit halber sind Kabel oder Leitungen teilweise nicht gezeigt.

Durch die vielseitigen Einsatzmöglichkeiten in einem Fahrzeugscheinwerfer, aber auch durch die vielen Varianten an Fahrzeugscheinwerfers ist der Fahrzeugscheinwerfer selbst nicht gezeigt. Dem Fachmann ist jedoch klar, wie der Kabelkanal in einem Fahrzeugscheinwerfer angeordnet werden kann. Da der Kabelkanal innerhalb eines erfindungsgemäßen Fahrzeugscheinwerfers angeordnet ist, ist sichergestellt, dass Umwelteinflüsse gegenüber einem Kabelkanal, der beispielsweise innerhalb des Motorraums eines Kraftfahrzeugs angeordnet ist, deutlich reduziert sind. Deshalb ist es möglich, kostengünstige Materialien für die Herstellung des Kabelkanals einzusetzen, wie im Weiteren ausgeführt. Auch in der Formgebung eines Kabelkanals innerhalb eines Scheinwerfers muss beispielsweise nicht berücksichtigt werden, dass an einem Kabelkanal, der im Motorraum eines Fahrzeuges angeordnet ist, anhaftende Flüssigkeiten, wie Öle oder Betriebsflüssigkeiten aus dem Motorraum an unerwünschte Orte abrinnen können. Deshalb ist es nicht erforderlich, einen Kabelkanal, der innerhalb eines Scheinwerferwerfers angeordnet ist, beispielsweise durch eine Abdeckung oder durch eine geschlossene Bauform dicht auszuführen, was zu geringerem Gewicht und geringeren Kosten beitragen kann.

Die Ausführungsbeispiele in den gezeigten Figuren stellen erfindungsgemäße Kabelkanäle in jeweils nicht verbautem Zustand dar, das heißt, dass bei Montage die Kabelkanäle speziell an den Stellen, in denen zwei Kabelbahnen durch eine Brücke gemäß der Erfindung verbunden sind, häufig flexibel biegbar sind und dadurch einem variabel festlegbaren Verlauf beispielsweise innerhalb eines Motorraums eines Fahrzeugs folgen können.

Grundsätzlich sind auch andere Formen für Kabelkanäle denkbar, beispielsweise solche mit in Längsrichtung gekrümmten Kabelbahnen, um spezielle Einbauvorschriften zu erfüllen. Neben anderen Querschnitts-Profilen der Kabelbahnen sind Halterungspunkte zur Montage beziehungsweise zur Befestigung der einzelnen Kabelbahnen an Montagepunkten in einem Fahrzeug mögliche weitere Ausführungen des erfindungsgemäßen Kabelkanals.

In Fig. 1 ist ein erster Aspekt der Erfindung durch einen Kabelkanal 1 gezeigt, der zumindest zwei entlang einer Längsrichtung verlaufende Kabelbahnen 110,120, die sich jeweils in Längsrichtung 50 zwischen zwei Bahnenden 116, 117, 126, 127 erstrecken, umfasst.

Jede Kabelbahn 110,120 ist quer zu ihrer Längsrichtung durch einen im Wesentlichen U-förmigen Querschnitt, der durch zwei Schenkel 111, 121, 112, 122 und eine Basis 113, 123 gebildet. Die Schenkel 111, 112, 121, 122 sind über die Basis 113, 123 miteinander verbunden und die Schenkel weisen jeweils offene Schenkelenden 114, 115, 124, 125 auf.

In diesem Zusammenhang wird unter einer Leitung oder einem Kabel beispielsweise verstanden:
- ein elektrisch leitender Draht zur Leitung von elektrischem Strom,
- ein Schlauch oder ein Rohr zur Leitung eines Gases oder einer Flüssigkeit für beispielsweise ein pneumatisches oder ein hydraulischen Mediums für eine Druckleitung oder ein Kühlmedium für ein Kühlsystem,
- optional elektrisches, magnetisches oder thermisches Isolationsmaterial, das die Drähte, Schläuche oder Rohre umhüllt,
- optional elektrische oder magnetische Abschirmungen,
- mechanische Zugentlastungen.

Ein Kabel- oder Leitungsbündel kann mehrere der gerade genannten Leitungen oder Kabel enthalten.

In diesem Zusammenhang bedeutet ein im Wesentlichen U-förmiger Querschnitt einer Kabelbahn eine Formgebung im Querschnitt, wobei der äußere Rand des inneren Bereichs der Kabelbahn zumindest zu 50% und maximal zu 90% durch die Kabelbahn belegt ist. Somit umklammert die Kabelbahn die Kabel zumindest teilweise und hält sie an einem vordefinierten Ort. Es ist nicht wichtig, ob der Querschnitt eckige Kanten oder abgerundete Ecken aufweist. Ferner ist es in einer weiteren Ausführungsform (nicht gezeigt) der Erfindung möglich, dass die Kabelbahn längs ihrer Längsrichtung beispielsweise Änderungen im Querschnitt, Aufnahmen für weitere Komponenten wie Kabel-Klemmen und dergleichen, oder Öffnungen in den Seitenwänden oder im Boden aufweist, sowie einen gekrümmten oder entsprechend Verlegevorschriften beim Einbau beispielsweise in einem Fahrzeug erforderlichen Verlauf aufweist.

Die Formulierung "in einer gedachten Verlängerung gelegen" bezieht sich in diesem Zusammenhang auf die Bestimmung des jeweiligen Schenkels zweier aufeinander folgender Kabelbahnen, um den Verlauf der verbindenden Brücke zu bezeichnen und nicht auf eine Verlängerung der Kabelbahn im geometrischen Sinn. Mit anderen Worten kann wird unter einer gedachten Verlängerung verstanden, dass sich die einbeschriebenen Umfänge zweier in Längsrichtung aufeinander folgender Kabelbahnen zumindest zu 90% überschneiden.

Die zumindest zwei Kabelbahnen 110,120 sind in Längsrichtung 50 aneinander anreihbar, sodass sie in einer gedachten Verlängerung des im Wesentlichen U-förmigen Querschnitts gelegen sind und dabei untereinander einen Abstand 119 in Längsrichtung 50 aufweisen.

Die erste Kabelbahn 110 ist mit der zweiten Kabelbahn 120 an deren einander zugewandten Bahnenden 117, 126 über eine Brücke 118 verbunden. Die Brücke 118 verläuft vom offenen Schenkelende 114, 115 eines Schenkels 111, 112 der ersten Kabelbahn 110 zum offenen Schenkelende 125, 124 des schräg gegenüber gelegen Schenkels 122, 121 der zweiten Kabelbahn 120.

In diesem Zusammenhang bedeutet ein schräges Gegenüberliegen von zwei Schenkeln 111 und 122 der zwei in Längsrichtung 50 aufeinander folgenden Kabelbahnen 110 und 120, dass jener Schenkel 122 der nachfolgenden Kabelbahn 120, der in einer gedachten Verlängerung der Längsrichtung 50 des anderen Schenkels 112 der vorangehenden Kabelbahn 110 gelegen ist, mit "schräg gegenüberliegend" gemeint ist und nicht der Schenkel 111 einer Kabelbahn 110 mit dem Schenkel 121 der zweiten, nachfolgenden Kabelbahn 120, der in einer gedachten Verlängerung der Längsrichtung 50 des Schenkels 111 der vorangehenden Kabelbahn 110 gelegen ist.

Es ist in diesem Zusammenhang wichtig, dass mit der Lage von zwei Kabelbahnen 110 und 120, die in einer gedachten Verlängerung ihrer jeweiligen Schenkel und Basis gelegen sind, eine Anordnung in nicht montiertem Zustand gemeint ist. Die Brücke ist durch ihr Material oder ihre Geometrie bedingt biegbar oder formbar, und somit ist der Kabelkanal in seinem Verlauf sehr flexibel und kann beispielsweise durch den Motorraum oder durch die Karosserie eines Fahrzeugs verlaufend angeordnet werden.

Mit anderen Worten ist die erste Kabelbahn 110 mit der zweiten Kabelbahn 120 an einem Bahnende 117 und 126 über eine Brücke 118 verbunden, wobei die Brücke 118 vom offenen Schenkelende 114 des ersten Schenkels 111 der ersten Kabelbahn 110 zum offenen Schenkelende 125 des zweiten Schenkels 122 der zweiten Kabelbahn 120 verläuft.

Eine weitere mögliche Ausführungsform kann vorsehen (nicht gezeigt), dass eine einzelne Kabelbahn in zwei oder mehreren parallelen Kabelbahnen fortgesetzt ist und so eine Abzweigung des Kabelkanals bildet (nicht gezeigt). Dementsprechend wären mehrere Brücken an einer Verzweigung des Kabelkanals zu mehreren nachfolgenden, in verschiedene Richtungen verlaufende Kabelbahnen nötig, die mit einer gemeinsamen vorangehenden Kabelbahn verbunden sind. Dabei ist es vorteilhaft, wenn beide Schenkel der vorangehenden Kabelbahn genützt werden, um mittels zweier oder mehrerer Brücken die nachfolgenden Kabelbahnen zu verbinden. Für den Verlauf der Brücken gilt das vorher Gesagte und kann als Superposition erfindungsgemäßer Anordnungen angesehen werden, welche ebenso in den Schutzbereich der nachfolgenden Ansprüche fällt.

Grundsätzlich können unterschiedlichste Abzweigungen in vielfältigen Formen ausgeführt sein, um spezifische Verlegeverläufe der Leitungen, die durch Anordnung der zu verbindenden Baugruppen festgelegt sind, zu realisieren, wie dem Fachmann bekannt. Insgesamt ist der Kabelkanal 1 daher mit einer Schnittstelle zwischen den Kabelbahnen 110, 120 versehen, die es ermöglicht, dass das Kabelbündel einmal um die Kabelbahn 110 geschlagen beziehungsweise gewickelt wird. Das Kabelbündel wird dann in die nachfolgende Kabelbahn 120 eingelegt. Durch die Brücke 118 wird ein entsprechendes Kabelbündel formschlüssig im Kabelkanal 1 gehalten. Der Kabelkanal 1 kann somit gemeinsam mit dem Kabelbündel als vormontierte Baugruppe in einem Fahrzeugscheinwerfer montiert werden. Durch die Eigensteifigkeit der Kabel ist gewährleistet, dass sich die Kabel nicht selbstständig lösen können. Folglich ist eine schnelle und einfache Montage sowie Demontage des Kabelbündels oder Kabelstrangs durchführbar, ohne dass zusätzliche Werkzeuge oder Vorrichtungen benötigt werden.

Es ist außerdem ein Vorteil der Erfindung, dass ein Kabelkanal 1 durch ein herkömmliches Spritzgussverfahren hergestellt werden kann und dabei in einer Haupt-Entformrichtung entformbar ist, das heißt aus der Spritzgussform entnommen werden kann. Daher ist der Einsatz von entsprechenden Schiebern nicht erforderlich.

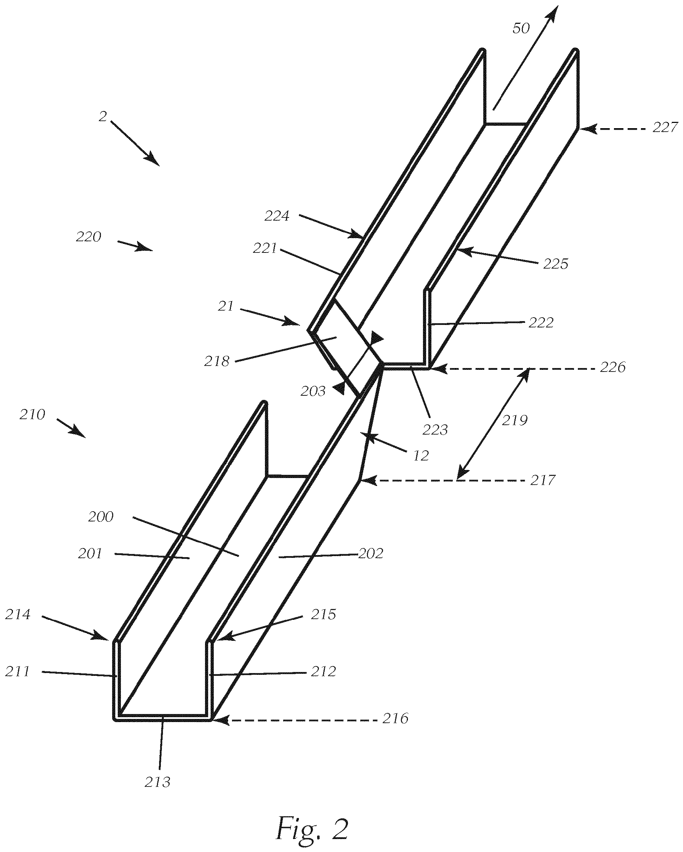

Fig. 2 zeigt als weitere Ausführungsform einen Kabelkanal 2, der zumindest zwei entlang einer Längsrichtung 50 verlaufende Kabelbahnen 210, 220, die sich jeweils in Längsrichtung 50 zwischen zwei Bahnenden 216, 217, 226, 227 erstrecken, umfasst.

Jede Kabelbahn 210, 220 ist quer zu ihrer Längsrichtung 50 durch einen im Wesentlichen U-förmigen Querschnitt, der durch zwei Schenkel 211, 221, 212, 222 und eine Basis 213, 223 gebildet. Die Schenkel 211, 212, 221, 222 sind über die Basis 213, 223 miteinander verbunden und die Schenkel weisen jeweils offene Schenkelenden 214, 215, 224, 225 auf.

Die zumindest zwei Kabelbahnen 210, 220 sind in Längsrichtung 50 aneinander anreihbar, sodass sie in einer gedachten Verlängerung des im Wesentlichen U-förmigen Querschnitts gelegen sind und dabei untereinander einen Abstand 219 in Längsrichtung 50 aufweisen.

Die erste Kabelbahn 210 ist mit der zweiten Kabelbahn 220 an ihren einander zugewandten Bahnenden 217, 226 über eine Brücke 218 verbunden. Die Brücke 218 verläuft vom offenen Schenkelende 214, 215 eines Schenkels 211, 212 der ersten Kabelbahn 210 zum offenen Schenkelende 225, 224 des schräg gegenüber gelegen Schenkels 222, 221 der zweiten Kabelbahn 220.

Mit anderen Worten ist die erste Kabelbahn 210 mit der zweiten Kabelbahn 220 an einem Bahnende 217 und 226 über eine Brücke 218 verbunden, wobei die Brücke 218 vom offenen Schenkelende 215 des zweiten Schenkels 212 der ersten Kabelbahn 210 zum offenen Schenkelende 224 des ersten Schenkels 221 der zweiten Kabelbahn 220 verläuft.

Die Brücke 218 des Kabelkanals 2 liegt an sich in Längsrichtung 50 erstreckenden Verlängerungen der Schenkel 212 und 221, wobei die Verlängerungen bei der Kabelbahn 210 über das Bahnende 217 des anderen Schenkels 211 beziehungsweise bei der Kabelbahn 220 über das Bahnende 226 des anderen Schenkels 222 hinaus ragen. Anders ausgedrückt ist die Brücke 218 mit einer Verlängerung eines Schenkels 212, 221 verbunden, die sich in oder gegen die Längsrichtung 50 zumindest teilweise als Fortsetzung des Schenkels 212, 221 erstreckt, wobei die Verlängerung des Schenkels 212, 221 über das Bahnende 217, 226 des jeweils anderen Schenkels 211, 222 derselben Kabelbahn 210, 220 am selben Bahnende 217, 226 hinaus ragt. Dadurch ist es möglich den Kabelkanal 2 einstückig durch ein Spritzgussverfahren herzustellen, wobei bei der Herstellung kein Schieber benötigt wird. Dadurch kann der Kabelkanal besonders kostengünstig hergestellt werden.

Ferner gelten die ergänzenden Ausführungen der Fig. 1.

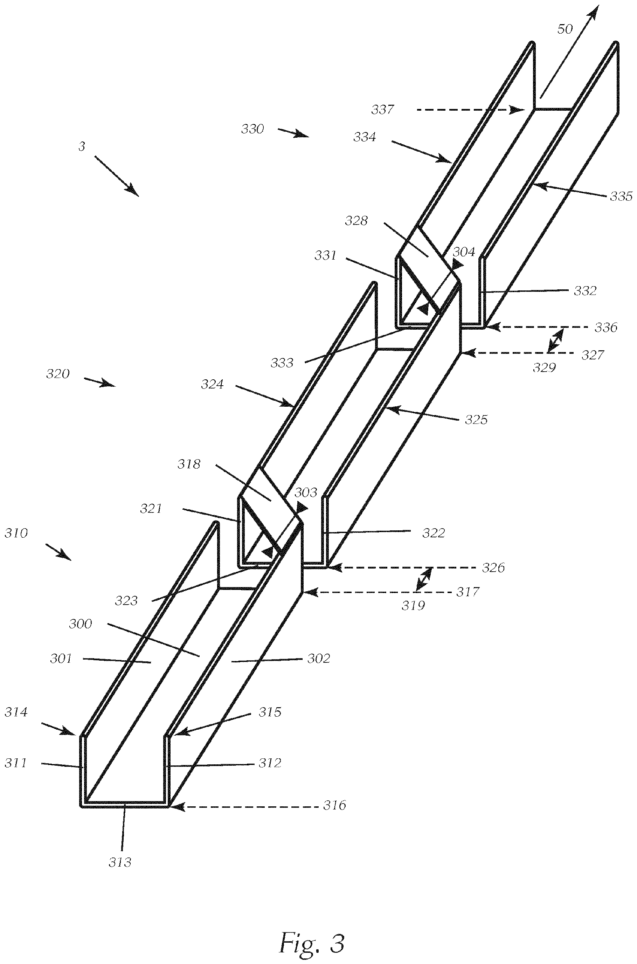

Fig. 3 stellt einen Kabelkanal 3 als weitere Ausführungsform dar, der analog zur den ersten beiden Ausführungsformen der Figuren 1 und 2 zumindest zwei entlang einer Längsrichtung 50 verlaufende Kabelbahnen 310, 320, die sich jeweils in Längsrichtung 50 zwischen zwei Bahnenden 316, 317, 326, 327 erstrecken, umfasst.

Jede Kabelbahn 310, 320 ist quer zu ihrer Längsrichtung 50 durch einen im Wesentlichen U-förmigen Querschnitt, der durch zwei Schenkel 311, 321, 312, 322 und eine Basis 313, 323 gebildet. Die Schenkel 311, 312, 321, 322 sind über die Basis 313, 323 miteinander verbunden und die Schenkel weisen jeweils offene Schenkelenden 314, 315, 324, 325 auf.

Die zumindest zwei Kabelbahnen, die die erste Kabelbahn 310 und die zweite Kabelbahn 320 umfassen, sind in Längsrichtung 50 aneinander anreihbar, sodass sie in einer gedachten Verlängerung des im Wesentlichen U-förmigen Querschnitts gelegen sind und dabei untereinander einen Abstand 319 in Längsrichtung 50 aufweisen.

Die erste Kabelbahn 310 ist mit der zweiten Kabelbahn 320 an ihren einander zugewandten Bahnenden 317, 326 über eine Brücke 318 verbunden. Die Brücke 318 verläuft vom offenen Schenkelende 314, 315 eines Schenkels 311, 312 der ersten Kabelbahn 310 zum offenen Schenkelende 325, 324 des schräg gegenüber gelegen Schenkels 322, 321 der zweiten Kabelbahn 320.

Ferner ist zumindest eine weitere, dritte Kabelbahn 330 umfasst, wobei die Kabelbahn 330 quer zu ihrer Längsrichtung 50 einen im Wesentlichen U-förmigen Querschnitt, der durch zwei Schenkel 331, 332 und eine Basis 333 gebildet ist, wobei die Schenkel 331, 332 über die Basis 333 miteinander verbunden sind und die Schenkel jeweils offene Schenkelenden 334, 335 aufweisen.

Die dritte Kabelbahn 330 ist in Längsrichtung 50 aneinander anreihbar, sodass sie in einer gedachten Verlängerung mit der ersten und zweiten Kabelbahn 310, 320 gelegen ist und die Kabelbahnen dabei untereinander einen Abstand 329 in Längsrichtung 50 aufweisen, und die zweite Kabelbahn 320 mit der dritten Kabelbahn 330 an einem jeweiligen Bahnende 327, 336 über eine zweite Brücke 328 verbunden ist, die im Wesentlichen parallel, das heißt gleichsinnig verlaufend, zur ersten Brücke 318 orientiert ist.

Im Übrigen gelten die ergänzenden Ausführungen der Fig. 1 und 2.

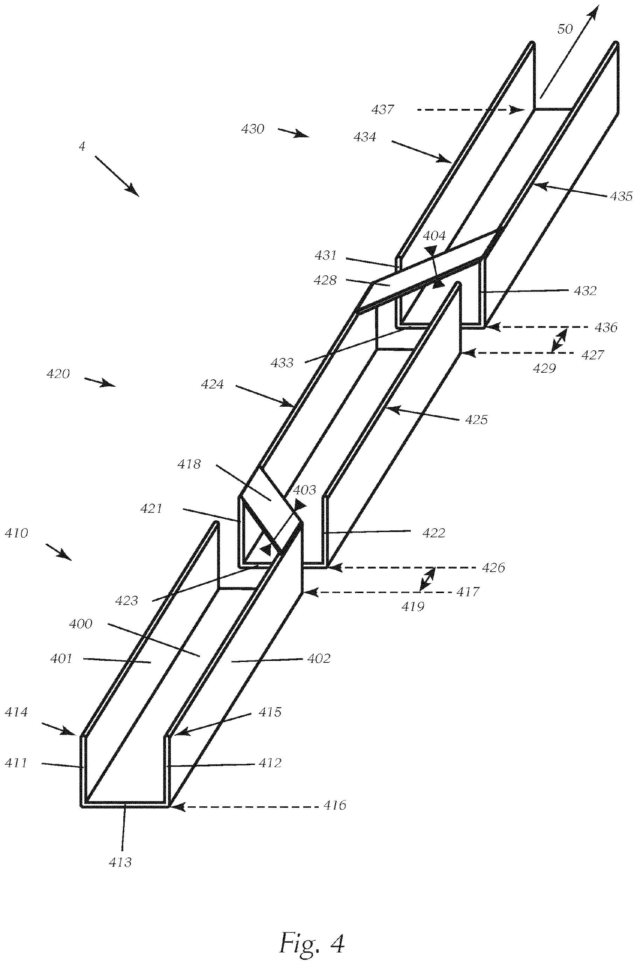

In Fig. 4 ist ein Kabelkanal 4 als weitere Ausführungsform dargestellt, der analog zur den drei Ausführungsformen der Figuren 1 bis 3 zumindest zwei entlang einer Längsrichtung 50 verlaufende Kabelbahnen 410, 420, die sich jeweils in Längsrichtung 50 zwischen zwei Bahnenden 416, 417, 426, 427 erstrecken, umfasst.

Jede Kabelbahn 410, 420 ist quer zu deren Längsrichtung 50 durch einen im Wesentlichen U-förmigen Querschnitt, der durch zwei Schenkel 411, 421, 412, 422 und eine Basis 413, 423 gebildet. Die Schenkel 411, 412, 421, 422 sind über die Basis 413, 423 miteinander verbunden und die Schenkel weisen jeweils offene Schenkelenden 414, 415, 424, 425 auf.

Die zumindest zwei Kabelbahnen, die die erste Kabelbahn 410 und die zweite Kabelbahn 420 umfassen, sind in Längsrichtung 50 aneinander anreihbar, sodass sie in einer gedachten Verlängerung des im Wesentlichen U-förmigen Querschnitts gelegen sind und dabei untereinander einen Abstand 419 in Längsrichtung 50 aufweisen.

Die erste Kabelbahn 410 ist mit der zweiten Kabelbahn 420 an deren einander zugewandten Bahnenden 417, 426 über eine Brücke 418 verbunden. Die Brücke 418 verläuft vom offenen Schenkelende 414, 415 eines Schenkels 411, 412 der ersten Kabelbahn 410 zum offenen Schenkelende 425, 424 des schräg gegenüber gelegen Schenkels 422, 421 der zweiten Kabelbahn 420.

Ferner ist zumindest eine weitere, dritte Kabelbahn 430 umfasst, wobei die Kabelbahn 430 quer zu ihrer Längsrichtung 50 einen im Wesentlichen U-förmigen Querschnitt, der durch zwei Schenkel 431, 432 und eine Basis 433 gebildet ist, wobei die Schenkel 431, 432 über die Basis 433 miteinander verbunden sind und die Schenkel jeweils offene Schenkelenden 434, 435 aufweisen.

Die dritte Kabelbahn 430 ist in Längsrichtung 50 aneinander anreihbar, sodass sie in einer gedachten Verlängerung mit der ersten und zweiten Kabelbahn 410, 420 gelegen ist und die Kabelbahnen dabei untereinander einen Abstand 429 in Längsrichtung 50 aufweisen, und die zweite Kabelbahn 420 mit der dritten Kabelbahn 430 an einem jeweiligen Bahnende 427, 436 über eine zweite Brücke 428 verbunden ist, die im Wesentlichen zur ersten Brücke 418 um die Längsrichtung 50 gespiegelt oder entgegengesetzt verlaufend orientiert ist.

Im Übrigen gelten die ergänzenden Ausführungen der Fig. 1 bis 3.

Für alle in den Figuren 1 bis 4 gezeigten Ausführungsformen kann der Abstand 119 in Längsrichtung 50 der Kabelbahnen 110 oder 120, der Abstand 219 der Kabelbahnen 210 oder 220, der Abstand 319 oder 329 der Kabelbahnen 310, 320 oder 330 und Abstand 419 oder 429 der Kabelbahnen 410, 420 oder 430 größer sein, vorzugsweise maximal dreimal so lang als die Breite der Basis 113, 123, 213, 223, 313, 323, 333, 413, 423, 433 zumindest einer der Kabelbahnen 110, 120, 210 220, 310, 320, 330, 410, 420 oder 430.

Für alle in den Figuren 1 bis 4 gezeigten Ausführungsformen kann die Erstreckung in Längsrichtung 50 zumindest einer der Kabelbahnen 110, 120, 210 220, 310, 320, 330, 410, 420 oder 430 zumindest zehnmal so lang wie die Breite der Basis 113, 123, 213, 223, 313, 323, 333, 413, 423, 433 zumindest einer der Kabelbahnen ist.

Für alle in den Figuren 1 bis 4 gezeigten Ausführungsformen können die ersten Schenkel 111, 121, 211, 221, 311, 321, 331, 411, 421, 431 und die zweiten Schenkel 112, 122, 212, 222, 312, 322, 332, 412, 422, 432 und die Basis 113, 123, 213, 223, 313, 323, 333, 413, 423, 433 zumindest einer der Kabelbahnen 110,120, 210 220, 310, 320, 330, 410, 420 oder 430 im Wesentlichen gleich lang sein.

Ferner kann für alle in den Figuren 1 bis 4 gezeigten Ausführungsformen zumindest eine der Kabelbahnen 110, 120, 210 220, 310, 320, 330, 410, 420 oder 430 in den Seitenwänden 101, 102, 201, 202, 301, 302, 401, 402, die durch die ersten Schenkel 111, 121, 211, 221, 311, 321, 331, 411, 421, 431 und die zweiten Schenkel 112, 122, 212, 222, 312, 322, 332, 412, 422, 432 mit deren Erstreckung in Längsrichtung 50 oder in dem Boden 100, 200, 300, 400, der durch die Basis 113, 123, 213, 223, 313, 323, 333, 413, 423, 433 mit dessen Erstreckung in Längsrichtung 50 in der jeweiligen Kabelbahn gebildet ist, Löcher, Aussparungen oder Variationen in der Wandstärke aufweisen.

Außerdem kann für alle in den Figuren 1 bis 4 gezeigten Ausführungsformen die Brücke 118, 218, 318, 328, 418 oder 428 in einer Ebene verlaufen, die parallel zur der Ebene liegt, die durch die Basis 113, 123, 213, 223, 313, 323, 333, 413, 423, 433 zumindest einer der Kabelbahnen und ihrer Erstreckung in Längsrichtung 50 gebildet ist.

Für alle in den Figuren 1 bis 4 gezeigten Ausführungsformen kann die Brücke 118, 218, 318, 328, 418 oder 428 eine Breite 103, 203, 303, 403 aufweisen, die kleiner ist als die Basis 113, 123, 213, 223, 313, 323, 333, 413, 423, 433 zumindest einer der Kabelbahnen. Die Breite 103, 203, 303, 403 wird im diesem Zusammenhang quer zu einer gedachten Verbindungslinie, die längs jener Brücke, die jeweils zwei Kabelbahnen miteinander verbindet, beispielsweise die die Kabelbahnen 110 und 120 verbindende Brücke 118, gelegen ist, definiert und gemessen. Die Breite 103, 203, 303, 403 bestimmt unter anderem die Elastizität der Verbindung, die durch die Brücke 118, 218, 318, 328, 418, 428 gebildet ist, die für die leichte Verlegung entlang eines vorbestimmten Verlegewegs des Kabelkanals beispielsweise innerhalb eines Fahrzeuges relevant ist.

Die Brücke 118, 218, 318, 328, 418 oder 428 kann außerdem Verstärkungen in ihrem Querschnitt aufweisen, die vorzugsweise auf der außenliegenden Fläche angeordnet sind und die für eine höhere mechanische Stabilität sorgen können, falls erforderlich.

In einem nicht gezeigten Herstellungsverfahren für einen erfindungsgemäßen Fahrzeugscheinwerfer mit einem Kabelkanal 1, 2, 3, 4 kann der Kabelkanal aus einem Kunststoffmaterial, insbesondere teilweise oder vollständig aus zumindest einem thermoplastischen Material, vorzugsweise einem thermoplastischen Terpolymer oder thermoplastischen Elastomer, und mittels einem 3D-Druckverfahren hergestellt sein. Dabei können vorzugsweise verschiedene Materialien für die zumindest zwei Kabelbahnen 110, 120, 210 220, 310, 320, 330, 410, 420 oder 430 und die zumindest eine Brücke 118, 218, 318, 328, 418 oder 428 eingesetzt sein.

Natürlich ist ein Kabelkanal 1, 2, 3 oder 4 auch durch ein konventionelles Spritzgussverfahren kostengünstig herstellbar, welches insbesondere für hohe Stückzahlen vorteilhaft ist.

Die Elastizität der Verbindung zwischen zwei Kabelbahnen ist sowohl durch die Breite 103, 203, 303, 403 der Brücke 118, 218, 318, 328, 418, 428 als auch durch das Material der Brücke 118, 218, 318, 328, 418, 428 bestimmt. Neben der Länge der Brücke 118, 218, 318, 328, 418, 428, die mit dem Abstand 119, 219, 319, 329, 419, 429 zusammenhängt, der durch Verlegevorschriften des Kabelkanals 1, 2, 3 , 4 bestimmt sein kann, ist grundsätzlich auch die Stärke beziehungsweise Höhe der Brücke 118, 218, 318, 328, 418, 428 für die Elastizität relevant, jedoch kann eine größere Höhe der Brücke 118, 218, 318, 328, 418, 428 entweder den Querschnitt der Kabelbahn einschränken oder den benötigten Bauraum für die Kabelbahn erhöhen, was in manchen Fällen unerwünscht ist. Folglich erfolgt die Anpassung der Stärke und der Elastizität der Verbindung, die durch die Brücke 118, 218, 318, 328, 418, 428 gebildet ist, vorzugsweise durch die Breite 103, 203, 303, 403 der Brücke 118, 218, 318, 328, 418, 428. Um die Elastizität der Brücke zu erhöhen, kann die geometrische Struktur der Brücke längs ihrer Erstreckung zwischen zwei oder mehreren Kabelbahnen beispielsweise wellenförmig, dreieckförmig oder rechteckförmig ausgebildet sein. Ebenso ist eine "Harmonikastruktur" für eine Brücke möglich.

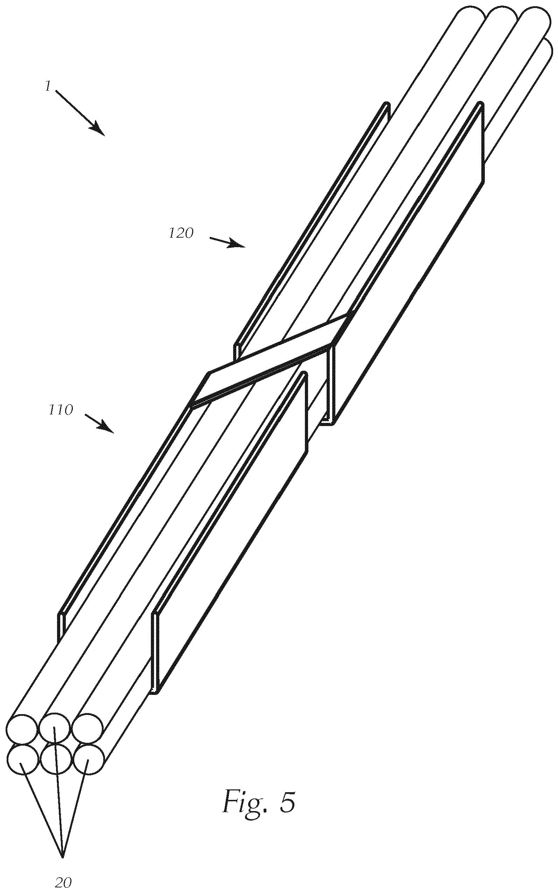

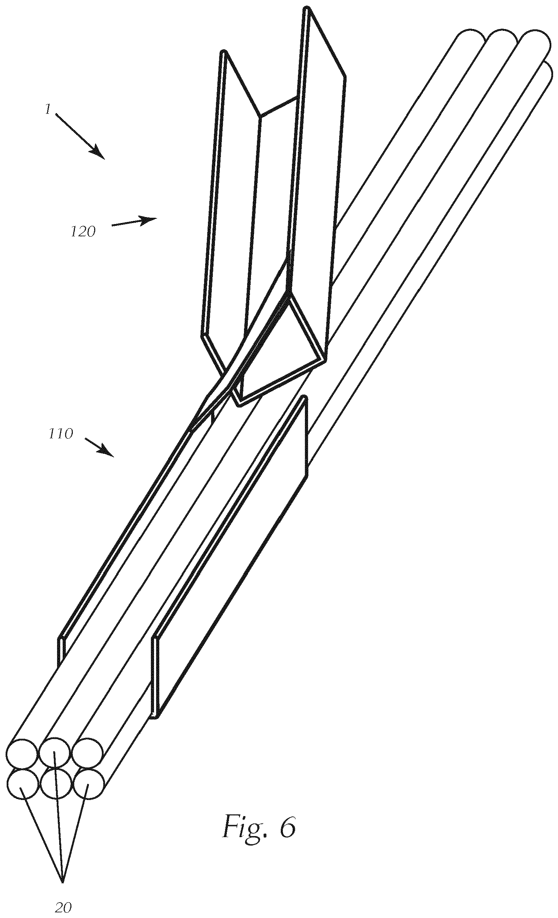

In Fig. 5 ist der Kabelkanal 1 aus Fig. 1 gezeigt, in den mehrere Kabel 20 in die Kabelbahn 110 eingelegt sind. Nach Durchführen einer Wickelbewegung durch die nachfolgende Kabelbahn 120 um die Kabel 20 herum wird erreicht, dass die Kabel 20 anschließend vollständig in beide Kabelbahnen 110,120 eingelegt sind, wie in Fig. 6 gezeigt. Die elastische Konzeption der Brücke 118 erlaubt die Wickelbewegung des Kabelkanals 1, ohne dass der Kabelkanal 1 bricht. Die Kabel 20 können dabei beispielsweise elektrische Leitungen sein. Die Brücke 118 bildet gemeinsam mit den Kabeln 20 und den

Kabelbahnen 110 und 120 eine formschlüssige Verbindung, sodass sichergestellt ist, dass keine Kabel 20 von selbst aus dem Kabelkanal 1 herausfallen.

Im Übrigen gelten die ergänzenden Ausführungen der Fig. 1 bis 4.

In dem Ausführungsbeispiel weist ein Kabelbaum einen vordefinierten Verlauf innerhalb eines erfindungsgemäßen Fahrzeugscheinwerfers auf. Dabei kann der Kabel- oder Leitungsbaum ein Bündel von elektrischen Leitungen und Schläuchen, die ein Klimatisierungsmedium wie beispielsweise Luft führen, umfassen. Das Klimatisierungsmedium kann in einen Klimakreislauf eingesetzt werden, um Lichtquellen des Fahrzeugscheinwerfers zu kühlen. Natürlich muss dabei stets sichergestellt sein, dass die elektrischen Kabel und die Schläuche so nebeneinander angeordnet werden können, ohne sich gegenseitig ungünstig zu beeinflussen.

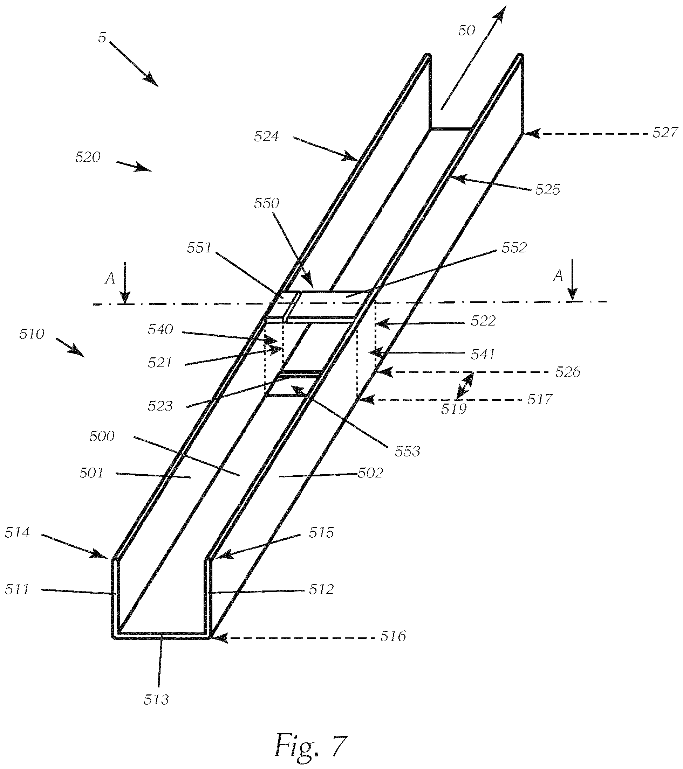

In Fig. 7 ist ein zweiter Aspekt der Erfindung als fünfte Ausführungsform gezeigt.

Ein Kabelkanal 5 umfasst zumindest zwei entlang der Längsrichtung 50 verlaufende Kabelbahnen 510, 520, die sich jeweils in Längsrichtung 50 zwischen zwei Bahnenden 516, 517, 526, 527 erstrecken.

Jede Kabelbahn 510, 520 weist quer zu ihrer Längsrichtung 50 einen im Wesentlichen U-förmigen Querschnitt auf, der durch zwei Schenkel 511, 521, 512, 522 und eine Basis 513, 523 gebildet ist. Die Schenkel 511, 512, 521, 522 sind über die Basis 513, 523 miteinander verbunden und die Schenkel weisen jeweils offene Schenkelenden 514, 515, 524, 525 auf. Eine erste Kabelbahn 510 und eine zweite Kabelbahn 520 der zumindest zwei Kabelbahnen 510, 520 sind in Längsrichtung 50 nacheinander anreihbar, sodass sie in einer gedachten Verlängerung des im Wesentlichen U-förmigen Querschnitts in Längsrichtung 50 gelegen sind und voneinander durch eine Unterbrechung zumindest der Basis 513, 523 getrennt sind, wodurch sie hinsichtlich der Unterbrechung zueinander einen Abstand 519 in Längsrichtung 50 aufweisen. Die erste Kabelbahn 510 ist mit der zweiten Kabelbahn 520 an deren einander zugewandten Bahnenden 517, 526 über zwei Brücken 540 und 541 verbunden.

Die zwei Brücken 540, 541 verlaufen jeweils von einem Schenkel 511, 512 der ersten Kabelbahn 510 zu dem jeweiligen in der Verlängerung des Schenkels 511, 512 gelegenen Schenkel 521, 522 der zweiten Kabelbahn 520.

Zumindest eine Kabelklemmbrücke 550 verläuft vom offenen Schenkelende 514, 515 eines Schenkels 511 der ersten Kabelbahn 510 zum offenen Schenkelende 525, 524 des anderen Schenkels 512 der ersten Kabelbahn 510. In diesem Beispiel verläuft die Kabelklemmbrücke 550 quer zur Längsrichtung 10.

Die Kabelklemmbrücke 550 kann einen Brückenvorsprung 551 und einen Brückenflügel 552 umfassen, die untereinander eine Trennstelle 553 aufweisen. Dadurch kann die Kabelklemmbrücke 550 aufgetrennt werden, um ein Kabel durch die Trennstelle 553 durchzudrücken. Der Brückenflügel 552 ist quer zur Längsrichtung 50 vorzugsweise länger als der Brückenvorsprung 551. Durch die Länge und Dicke des Brückenflügels 552 kann dieser elastische Eigenschaften aufweisen. Kabel können nach Auflegen und Anpressen auf die Trennstelle 553 zwischen Brückenvorsprung 551 und Brückenflügel 552 sehr einfach in den Kabelkanal eingebracht werden. Der Kabelkanal 5 weist zusätzlich an der Position der Kabelklemmbrücke 550 eine Unterbrechung der Basis 513 des Kabelbahn 510 auf, sodass Kabel auch dann eingelegt werden können, wenn bereits andere Kabel im Kabelkanal 5 liegen, da die Unterbrechung ein "Überdrücken" der im Kabelkanal 5 befindlichen Kabel (nicht gezeigt) erlaubt und Kabel sogar dann noch eingelegt werden können, wenn der Kabelkanal 5 nahezu voll bestückt ist. Unter "Überdrücken" versteht man in diesem Zusammenhang das Drücken der Kabel über das Innenvolumen des Kabelkanals hinaus. Mit anderen Worten werden die Kabel bei Überdrücken in die Trennstelle hinein gedrückt. Das kann notwendig sein, wenn der Kabelkanal bereits mit Kabeln bestückt ist und das zusätzliche Kabel am Brückenflügel vorbei in den Kabelkanal eingefügt werden soll. Bei voller Bestückung kann ein Formschluss zwischen einem Bündel an Kabeln und dem Kabelkanal 5 erreicht werden, sodass das Kabelbündel innerhalb der Kabelkanals 5 fixiert ist. Eine zusätzliche Befestigung, beispielsweise durch Kabelbinder ist somit nicht mehr nötig, was die Montage vereinfacht. Ein zusätzlicher Vorteil ist dadurch gegeben, dass die Anordnung einstückig durch eine Formgebung ohne Hinterschneidung für ein Spritzgussverfahren hergestellt werden kann.

Im Übrigen gelten die ergänzenden Ausführungen der Fig. 1 bis 6.

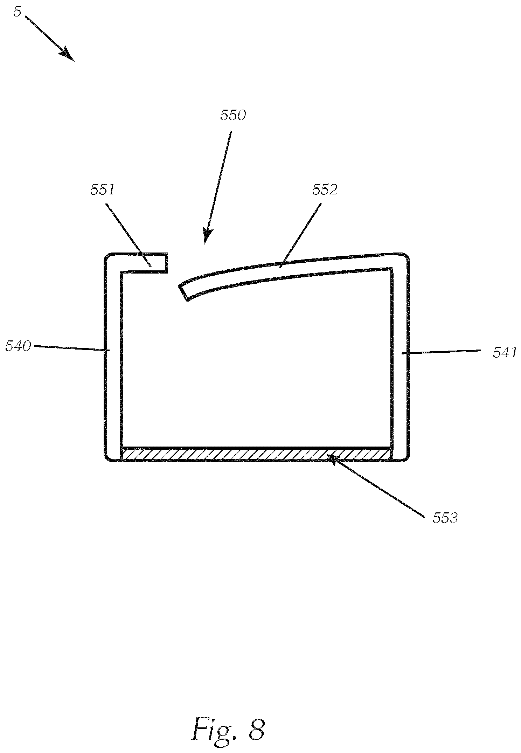

Fig. 8 zeigt einen Querschnitt des Kabelkanals 5 nach Fig. 7 in einer Schnittebene A-A, in die Kabelklemmbrücke 550 mit dem Brückenvorsprung 551 und dem Brückenflügel 552 erkennbar ist. In dieser Darstellung ist kein Kabel in den Kabelkanal 5 eingelegt. Der Brückenflügel 552 ist beispielsweise leicht nach innen in den Kabelkanal 5 gebogen, um das Einlegen der Kabel zu erleichtern und um den Brückenflügel 552 bei voller Bestückung des Kabelkanals 5 durch ein Bündel von Kabeln vorzuspannen und einen Formschluss zwischen dem Bündel an Kabeln und dem Kabelkanal 5 zu unterstützen.

Ferner ist erkennbar, dass in der Schnittebene A-A keine Basis einer Kabelbahn ausgebildet ist und somit die zwei aneinandergereihten Kabelbahnen 510, 520 durch den Abstand 519 unterbrochen sind. Dies ist wichtig, um den Kabelkanal 5 einstückig durch eine Formgebung ohne Hinterschneidung für ein Spritzgussverfahren herstellbar zu machen.

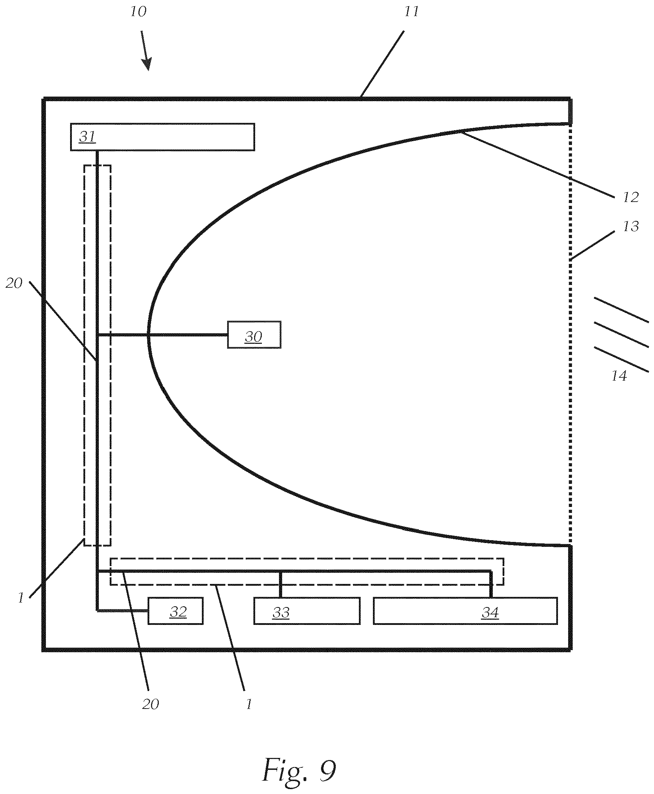

Fig. 9 zeigt schematisch einen erfindungsgemäßen Fahrzeugscheinwerfer 10, der ein Scheinwerfergehäuse 11 umfasst, zumindest einen Kabelkanal 1, 2, 3,4 oder 5, in den zumindest ein Kabel 20 eingelegt ist, sowie mehrere elektronische Komponenten 30, 31, 32, 33, 34 umfasst, wobei die Komponente 30 beispielsweise eine LED-Lichtquelle ist. Die elektronischen Komponenten 41, 42, 43, 44 können beispielsweise elektronische Schaltungen zum Ansteuern der Lichtquelle, insbesondere Leistungstransistoren, Sensoren zur Erfassung von Betriebsparametern, Prozessoreinheiten zur Kommunikation mit Komponenten der Fahrzeugelektronik, Heiz- oder Kühlelemente, oder elektronische Schaltungen zum Steuern von Pumpen, beispielsweise für Reinigungsdüsen des Scheinwerfers.

Die optische Funktion des Scheinwerfers 10 kann durch die Lichtquelle 41 und einen optischen Reflektor 12 gebildet sein. Das erzeugte Licht 14 kann beispielsweise durch eine transparente Frontscheibe 13 in Richtung vor dem Fahrzeug abgestrahlt werden. Es ist klar, dass weitere optische Komponenten umfasst sein können, wie beispielsweise Projektionslinsen.

**Bezugszeichenliste**

| | |
|---|---|
| A-A | Schnittebene |
| 1,2,3,4,5 | Kabelkanal |
| 10 | Fahrzeugscheinwerfer |
| 11 | Scheinwerfergehäuse |
| 12 | optischer Reflektor |
| 13 | transparente Frontscheibe |
| 14 | abgestrahltes Licht |
| 20 | Kabel, Leitung oder Schlauch |
| 30, 31, 32, 33, 34 | elektronische Komponenten |
| 50 | Längsrichtung |
| 100, 200, 300, 400, 500 | Boden der Kabelbahn |
| 101, 102, 201, 202, 301, 302, 401, 402, 501, 502 | Seitenwand der Kabelbahn |
| 103, 203, 303, 304,403,404 | Breite der Brücke |
| 110, 120, 210, 220, 310, 320, 330, 410, 420, 430, 510, 520 | Kabelbahn |
| 111, 121, 211, 221, 311, 321, 331, 411, 421, 431, 511, 521 | erster Schenkel der Kabelbahn |
| 112, 122, 212, 222, 312, 322, 332,412, 422,432, 512, 522 | zweiter Schenkel der Kabelbahn |
| 113, 123, 213, 223, 313, 323, 333, 413, 423, 433, 513, 523 | Basis der Kabelbahn |
| 114, 124, 214, 224, 314, 324, 334, 414, 424,434, 514, 524 | offenes Schenkelende des ersten Schenkels |
| 115, 125, 215, 225, 315, 325, 335, 415, 425, 435, 515, 525 | offenes Schenkelende des zweiten Schenkels |
| 116, 126, 316, 326, 336, 416, 426, 436, 516, 526 | erstes Bahnende der Kabelbahn |
| 117, 127, 317, 327, 337, 417, 427, 437, 517, 527 | zweites Bahnende der Kabelbahn |
| 118, 218, 318, 328, 418, 428, 540, 541 | Brücke |
| 119, 219, 319, 329, 419, 429, 519 | Abstand |
| 550 | Kabelklemmbrücke |
| 551 | Brückenvorsprung |
| 552 | Brückenflügel |
| 553 | Trennstelle |

## Patentansprüche

1. Fahrzeugscheinwerfer (10), der einen Kabelkanal (1, 2, 3, 4, 5), welcher eine vordefinierte Form entsprechend einem Verlauf innerhalb des Fahrzeugscheinwerfers aufweist, umfasst,
wobei der Kabelkanal (1, 2, 3, 4, 5) zumindest zwei entlang einer Längsrichtung (50) verlaufende Kabelbahnen (310, 320), die sich jeweils in Längsrichtung (50) zwischen zwei Bahnenden (316, 317, 326, 327) erstrecken, umfasst und
jede Kabelbahn (310, 320) quer zu ihrer Längsrichtung (50) einen im Wesentlichen U-förmigen Querschnitt, der durch zwei Schenkel (311, 321, 312, 322) und eine Basis (313, 323) gebildet ist, wobei die Schenkel (311, 312, 321, 322) über die Basis (313, 323) miteinander verbunden sind und die Schenkel jeweils offene Schenkelenden (314, 315, 324, 325) aufweisen,
**dadurch gekennzeichnet, dass**
eine erste Kabelbahn (310) und eine zweite Kabelbahn (320) der zumindest zwei Kabelbahnen (310, 320) in Längsrichtung (50) nacheinander anreihbar sind, sodass sie in einer gedachten Verlängerung des im Wesentlichen U-förmigen Querschnitts in Längsrichtung (50) gelegen sind und voneinander durch eine Unterbrechung zumindest der Basis (313, 323) getrennt sind, wodurch sie hinsichtlich der Unterbrechung zueinander einen Abstand (319) in Längsrichtung (50) aufweisen, und die erste Kabelbahn (310) mit der zweiten Kabelbahn (320) an deren einander zugewandten Bahnenden (317, 326) über zumindest eine Brücke (318) verbunden ist,
wobei die zumindest eine Brücke (318) vom offenen Schenkelende (314, 315) eines Schenkels (311, 312) der ersten Kabelbahn (310) zum offenen Schenkelende (325, 324) des schräg gegenüber gelegenen Schenkels (322, 321) der zweiten Kabelbahn (320) verläuft.

2. Fahrzeugscheinwerfer (10) nach Anspruch 1, der einen Kabelkanal (3, 4) umfasst,
**dadurch gekennzeichnet, dass** der Kabelkanal (3, 4) zumindest eine weitere, zu der ersten Kabelbahn (310) und zweiten Kabelbahn (320) nachfolgend angereihte dritte Kabelbahn (330) umfasst, wobei die Kabelbahn (330) quer zu ihrer Längsrichtung (50) einen im Wesentlichen U-förmigen Querschnitt, der durch zwei Schenkel (331, 332) und eine Basis (333) gebildet ist, wobei die Schenkel (331, 332) über die Basis (333) miteinander verbunden sind und die Schenkel jeweils offene Schenkelenden (334, 335) aufweisen, wobei
die dritte Kabelbahn (330) in Längsrichtung (50) aneinander anreihbar ist, sodass sie in einer gedachten Verlängerung mit der ersten und zweiten Kabelbahn (310, 320) in Längsrichtung (50) gelegen ist und die Kabelbahnen dabei untereinander einen Abstand (329) in Längsrichtung (50) aufweisen, und die zweite Kabelbahn (320) mit der dritten Kabelbahn (330) an einem jeweiligen Bahnende (327, 336) über eine zweite Brücke (328) verbunden ist, die im Wesentlichen parallel zur ersten Brücke (318) orientiert ist.

3. Fahrzeugscheinwerfer (10) nach Anspruch 1 oder 2, der einen Kabelkanal (1, 2, 3, 4) umfasst, **dadurch gekennzeichnet, dass** die Brücke (318, 328) eine Breite (303) aufweist, die kleiner ist als die Basis (313, 323, 333) zumindest einer der Kabelbahnen (310, 320, 330).

4. Fahrzeugscheinwerfer (10) nach einem der Ansprüche 1 bis 3, der einen Kabelkanal (2) umfasst, **dadurch gekennzeichnet, dass** die Brücke (218) mit einer Verlängerung eines Schenkels (212, 221) verbunden ist, die sich in oder gegen die Längsrichtung (50) zumindest teilweise als Fortsetzung des Schenkels (212, 221) erstreckt, wobei die Verlängerung des Schenkels (212, 221) über das Bahnende (217, 226) des jeweils anderen Schenkels (211, 222) derselben Kabelbahn (210, 220) am selben Bahnende (217, 226) hinaus ragt.

5. Fahrzeugscheinwerfer (10) nach Anspruch 1, der einen Kabelkanal (5) umfasst, **dadurch gekennzeichnet, dass** zumindest eine Brücke (540, 541) von einem Schenkel (511, 512) der ersten Kabelbahn (510) zu dem in der Verlängerung des Schenkels (511, 512) gelegenen Schenkel (521, 522) der zweiten Kabelbahn (520) verläuft und zumindest eine Kabelklemmbrücke (550) vom offenen Schenkelende (514, 515) eines Schenkels (511) der ersten Kabelbahn (510) zum offenen Schenkelende (525, 524) des anderen Schenkels (512) der ersten Kabelbahn (510) verläuft, und dabei vorzugsweise quer zur Längsrichtung (50) verläuft.

6. Fahrzeugscheinwerfer nach Anspruch 5, **dadurch gekennzeichnet, dass** die zumindest eine Kabelklemmbrücke (550) einen Brückenvorsprung (551) und einen Brückenflügel (552) beinhaltet, wobei der
Brückenflügel (552) quer zur Längsrichtung (50) vorzugsweise länger ist als der Brückenvorsprung (551).

7. Fahrzeugscheinwerfer (10) nach einem oder mehreren der vorhergehenden Ansprüche, der einen Kabelkanal (1, 2, 3, 4, 5) umfasst, **dadurch gekennzeichnet, dass** der Abstand (319, 329) der Kabelbahnen (310, 320, 330) in Längsrichtung (50) größer ist als die Breite der Basis (313, 323, 333) zumindest einer der Kabelbahnen (310, 320, 330) und bevorzugt maximal fünfmal so lang, besonders bevorzugt maximal dreimal so lang.

8. Fahrzeugscheinwerfer (10) nach einem oder mehreren der vorhergehenden Ansprüche, der einen Kabelkanal (1, 2, 3, 4, 5) umfasst, **dadurch gekennzeichnet, dass** die Erstreckung in Längsrichtung (50) zumindest einer der Kabelbahnen (310, 320, 330) zumindest dreimal, bevorzugt zumindest fünfmal so lang, besonders bevorzugt zumindest zehnmal so lang wie die Breite der Basis (313, 323, 333) zumindest einer der Kabelbahnen (310, 320, 330) ist.

9. Fahrzeugscheinwerfer (10) nach einem oder mehreren der vorhergehenden Ansprüche, der einen Kabelkanal (1, 2, 3,4, 5) umfasst, **dadurch gekennzeichnet, dass** die Schenkel (311, 312, 321, 322, 331, 332) und die Basis (313, 323, 333) zumindest einer der Kabelbahnen (310, 320, 330) im Wesentlichen gleich lang sind.

10. Fahrzeugscheinwerfer (10) nach einem oder mehreren der vorhergehenden Ansprüche, der einen Kabelkanal (1, 2, 3, 4, 5) umfasst, **dadurch gekennzeichnet, dass** zumindest eine der Kabelbahnen (310, 320, 330) in den Seitenwänden (301, 302), die durch die Schenkel (311, 312, 321, 322, 331, 332) mit deren Erstreckung in Längsrichtung (50) oder in dem Boden (300), der durch die Basis (313, 323, 333) mit ihrer Erstreckung in Längsrichtung (50) in der jeweiligen Kabelbahn (310, 320, 330) gebildet ist, Löcher, Aussparungen, Befestigungslaschen oder Variationen in der Wandstärke aufweisen.

11. Fahrzeugscheinwerfer (10) nach einem oder mehreren der vorhergehenden Ansprüche, der einen Kabelkanal (1, 2, 3, 4, 5) umfasst, **dadurch gekennzeichnet, dass** die Brücke (318, 328) in einer Ebene verläuft, die parallel zur der Ebene liegt, die durch die Basis (313, 323, 333) zumindest einer der Kabelbahnen (310, 320, 330) und ihrer Erstreckung in Längsrichtung (50) gebildet ist.

12. Herstellungsverfahren eines Fahrzeugscheinwerfers (10) nach einem der Ansprüche 1 bis 11, **dadurch gekennzeichnet, dass** der Kabelkanal (1, 2, 3, 4, 5) aus einem Kunststoffmaterial, insbesondere teilweise oder vollständig aus zumindest einem thermoplastischen Material, vorzugsweise einem thermoplastischen Terpolymer oder thermoplastischen Elastomer, und mittels eines 3D-Druckverfahrens hergestellt ist und vorzugsweise verschiedene Materialien für die zumindest zwei Kabelbahnen (310, 320, 330) und die zumindest eine Brücke (318, 328) eingesetzt sind.

13. Herstellungsverfahren eines Fahrzeugscheinwerfers (10) nach einem der Ansprüche 1 bis 11, **dadurch gekennzeichnet, dass** der Kabelkanal (1, 2, 3, 4, 5) aus einem Kunststoffmaterial, vorzugsweise einem thermoplastischen Terpolymer, und mittels eines Spritzgussverfahrens hergestellt ist.

## Claims

1. Vehicle headlamp (10) which comprises a cable channel (1, 2, 3, 4, 5) which has a predefined shape corresponding to a profile within the vehicle headlamp,
wherein the cable channel (1, 2, 3, 4, 5) comprises at least two cable runs (310, 320) extending along a longitudinal direction (50), said cable runs respectively extending in the longitudinal direction (50) between two run ends (316, 317, 326, 327), and each cable run (310, 320) [has] an essentially U-shaped cross section transverse to its longitudinal direction (50), said cross section is formed by two legs (311, 321, 312, 322) and a base (313, 323), wherein the legs (311, 312, 321, 322) are connected to each other via the base (313, 323) and the legs each have an open leg end (314, 315, 324, 325),
**characterized in that**
a first cable run (310) and a second cable run (320) of the at least two cable runs (310, 320) are configured to be aligned in series in the longitudinal direction (50) such that they are laid in a virtual extension of the essentially U-shaped cross section in the longitudinal direction (50) and are separated from each other by an interruption of at least the base (313, 323), by which means they have a spacing (319) in the longitudinal direction (50) with respect to the interruption, and the first cable run (310) is connected to the second cable run (320) at their facing run ends (317, 326) via at least one bridge (318),
wherein the at least one bridge (318) extends from the open leg end (314, 315) of a leg (311, 312) of the first cable run (310) to the open leg end (325, 324) of the obliquely opposite leg (322, 321) of the second cable run (320).

2. Vehicle head lamp (10) according to claim 1, which comprises a cable channel (3, 4), **characterized in that** the cable channel (3, 4) comprises at least one additional third cable run (330) aligned in series with the first cable run (310) and the second cable run (320), wherein the cable run (330) [has] an essentially U-shaped cross section, which is formed by two legs (331, 332) and a base (333), transverse to its longitudinal direction (50), wherein the legs (331, 332) are connected to each other via the base (333) and the legs each have open leg ends (334, 334), wherein the third cable run (330) is configured to be aligned in series in the longitudinal direction (50) such that it is laid in the longitudinal direction (50) in a virtual extension with the first and second cable run (310, 320), and the cable runs thereby have a spacing (329) from each other in the longitudinal direction (50), and the second cable run (320) is connected to the third cable run (330) at one of the respective run ends (327, 336) via a second bridge (328) which is oriented essentially parallel to the first bridge (318).

3. Vehicle head lamp (10) according to claim 1 or 2, which comprises a cable channel (1, 2, 3, 4), **characterized in that** the bridge (318, 328) has a width (303) which is smaller than the base (313, 323, 333) of at least one of the cable runs (310, 320, 330) .

4. Vehicle head lamp (10) according to any one of claims 1 to 3, which comprises a cable channel (2), **characterized in that** the bridge (218) is connected to an extension of a leg (212, 221) which extends at least partially in or counter to the longitudinal direction (50) as a continuation of the leg (212, 221), wherein the extension of the leg (212, 221) projects past the run end (217, 226) of the respective other leg (211, 222) of the same cable run (210, 220) at the same run end (217, 226).

5. Vehicle head lamp (10) according to claim 1, which comprises a cable channel (5), **characterized in that** at least one bridge (540, 541) extends from one leg (511, 512) of the first cable run (510) to the leg (521, 522) of the second cable run (520) lying in the extension of the leg (511, 512), and at least one cable clamping bridge (550) extends from the open leg end (514, 515) of a leg (511) of the first cable run (510) to the open leg end (525, 524) of the other leg (512) of the first cable run (510) and thereby preferably transverse to the longitudinal direction (50) .

6. Vehicle head lamp according to claim 5, **characterized in that** the at least one cable clamping bridge (550) includes a bridge projection (551) and a bridge span (552),
wherein the bridge span (552) transverse to the longitudinal direction (50) is preferably longer than the bridge projection (551).

7. Vehicle head lamp (10) according to any one of more of the preceding claims, which comprises a cable channel (1, 2, 3, 4, 5), **characterized in that** the spacing (319, 329) of the cable runs (310, 320, 330) is greater in the longitudinal direction (50) than the width of the base (313, 323, 333) of at least one of the cable runs (310, 320, 330) and preferably a maximum of five times as long, particularly preferably a maximum of three times as long.

8. Vehicle head lamp (10) according to any one of more of the preceding claims, which comprises a cable channel (1, 2, 3, 4, 5), **characterized in that** the extension in the longitudinal direction (50) of at least one of the cable runs (310, 320, 330) is at least three times, preferably at least five times as long, particularly preferably at least ten times as long as the width of the base (313, 323, 333) of at least one of the cable runs (310, 320, 330).

9. Vehicle head lamp (10) according to any one of more of the preceding claims, which comprises a cable channel (1, 2, 3, 4, 5), **characterized in that** the legs (311, 312, 321, 322, 331, 332) and the bases (313, 323, 333) of at least one of the cable runs (310, 320, 330) are essentially equally long.

10. Vehicle head lamp (10) according to any one of more of the preceding claims, which comprises a cable channel (1, 2, 3, 4, 5), **characterized in that** at least one of the cable runs (310, 320, 330) has holes, recesses, fastening tabs, or variations in the wall thickness in the side walls (301, 302), which are formed in the respective cable run (310, 320, 330) by the legs (311, 312, 321, 322, 331, 332) with their extension in the longitudinal direction (50), or in the bottom (300), which is formed by the bases (313, 323, 333) with their extension in the longitudinal direction (50).

11. Vehicle head lamp (10) according to any one of more of the preceding claims, which comprises a cable channel (1, 2, 3, 4, 5), **characterized in that** the bridge (318, 328) runs in a plane which lies parallel to the plane which is formed by the bases (313, 323, 333) of at least one of the cable runs (310, 320, 330) and their extension in the longitudinal direction (50).

12. Production method for a vehicle head lamp (10) according to any one of claims 1 to 11, **characterized in that** the cable channel (1, 2, 3, 4, 5) is made from a plastic material, in particular partially or completely from at least one thermoplastic material, preferably a thermoplastic terpolymer or thermoplastic elastomer, and is produced by means of a 3D printing process, and preferably different materials are used for the at least two cable channels (310, 320, 330) and the at least one bridge (318, 328).

13. Production method for a vehicle head lamp (10) according to any one of claims 1 to 11, **characterized in that** the cable channel (1, 2, 3, 4, 5) is made from a plastic material, preferably from a thermoplastic terpolymer, and is produced by means of an injection molding process.

## Revendications

1. Phare de véhicule (10), qui comporte une goulotte à câbles (1, 2, 3, 4, 5), laquelle présente une forme prédéfinie correspondant à un trajet à l'intérieur du phare de véhicule,
dans lequel la goulotte à câbles (1, 2, 3, 4, 5) comporte au moins deux chemins de câbles (310, 320) s'étendant le long d'une direction longitudinale (50), qui s'étendent chacun dans la direction longitudinale (50) entre deux extrémités de chemin (316, 317, 326, 327) et
chaque chemin de câbles (310, 320) a transversalement à sa direction longitudinale (50) une section transversale sensiblement en forme de U qui est formée par deux branches (311, 321, 312, 322) et une base (313, 323), les branches (311, 312, 321, 322) étant reliées l'une à l'autre par la base (313, 323) et les branches présentant chacune des extrémités de branche ouvertes (314, 315, 324, 325),
**caractérisé par le fait que**
un premier chemin de câbles (310) et un deuxième chemin de câbles (320) desdits au moins deux chemins de câbles (310, 320) sont aptes à s'aligner l'un derrière l'autre dans la direction longitudinale (50), de telle sorte qu'ils sont situés dans la direction longitudinale (50) dans un prolongement imaginaire de la section transversale sensiblement en forme de U et sont séparés l'un de l'autre par une interruption au moins de la base (313, 323), ce par quoi ils présentent dans la direction longitudinale (50) une distance (319) entre eux au niveau de l'interruption, et le premier chemin de câbles (310) est relié au deuxième chemin de câbles (320) par au moins un pont (318) à leurs extrémités de chemin (316, 326) tournées l'une vers l'autre,
dans lequel ledit au moins un pont (318) s'étend de l'extrémité de branche ouverte (314, 315) d'une branche (311, 312) du premier chemin de câbles (310) à l'extrémité de branche ouverte (325, 324) de la branche opposée de façon oblique (322, 321) du deuxième chemin de câbles (320) .

2. Phare de véhicule (10) selon la revendication 1, qui comporte une goulotte à câbles (3, 4), **caractérisé par le fait que** la goulotte à câbles (3, 4) comporte au moins un autre, troisième, chemin de câbles (330) aligné à la suite par rapport au premier chemin de câbles (310) et au deuxième chemin de câbles (320), les chemins de câbles (330) présentant transversalement à leur direction longitudinale (50) une section transversale sensiblement en forme de U, qui est formée par deux branches (331, 332) et une base (333), les branches (331, 332) étant reliées l'une à l'autre par la base (333) et les branches présentant chacune des extrémités de branche ouvertes (334, 335),
dans lequel le troisième chemin de câbles (330) est apte à être aligné avec les autres dans la direction longitudinale (50), de telle sorte qu'il est situé dans la direction longitudinale (50) dans un prolongement imaginaire avec les premier et deuxième chemins de câbles (310, 320) et les chemins de câbles présentent à cet égard dans la direction longitudinale (50) une distance (329) entre eux, et le deuxième chemin de câbles (320) est relié au troisième chemin de câbles (330) à une extrémité de chemin respective (327, 336) par un second pont (328) qui est orienté sensiblement parallèlement au premier pont (318).

3. Phare de véhicule (10) selon l'une des revendications 1 ou 2, qui comporte une goulotte à câbles (1, 2, 3, 4), **caractérisé par le fait que** le pont (318, 328) présente une largeur (303) qui est plus petite que la base (313, 323, 333) d'au moins l'un des chemins de câbles (310, 320, 330).

4. Phare de véhicule (10) selon l'une des revendications 1 à 3, qui comporte une goulotte à câbles (2), **caractérisé par le fait que** le pont (218) est relié à un prolongement d'une branche (212, 221), qui s'étend au moins partiellement en tant que poursuite de la branche (212, 221) dans ou par rapport à la direction longitudinale (50), le prolongement de la branche (212, 221) dépassant de l'extrémité de chemin (217, 226) de l'autre branche respective (211, 222) du même chemin de câbles (210, 220) sur la même extrémité de chemin (217, 226).

5. Phare de véhicule (10) selon la revendication 1, qui comporte une goulotte à câbles (5), **caractérisé par le fait qu'au** moins un pont (540, 541) s'étend d'une branche (511, 512) du premier chemin de câbles (510) à la branche (521, 522) située dans le prolongement de la branche (511, 512) du deuxième chemin de câbles (520) et au moins un pont de serrage de câbles (550) s'étend de l'extrémité de branche ouverte (514, 515) d'une branche (511) du premier chemin de câbles (510) à l'extrémité de branche ouverte (525, 524) de l'autre branche (512) du premier chemin de câbles (510), et à cet égard, s'étend de préférence transversalement à la direction longitudinale (50).

6. Phare de véhicule (10) selon la revendication 5, **caractérisé par le fait que** ledit au moins un pont de serrage de câbles (550) comporte une saillie de pont (551) et une aile de pont (552), l'aile de pont (552) étant transversalement à la direction longitudinale (50) de préférence plus longue que la saillie de pont (551).

7. Phare de véhicule (10) selon l'une ou plusieurs des revendications précédentes, qui comporte une goulotte à câbles (1, 2, 3, 4, 5), **caractérisé par le fait que** la distance (319, 329) des chemins de câbles (310, 320, 330) est dans la direction longitudinale (50) plus grande que la largeur de la base (313, 323, 333) au moins de l'un des chemins de câbles (310, 320, 330) et de préférence au maximum cinq fois plus longue, de façon particulièrement préférée au maximum trois fois plus longue.

8. Phare de véhicule (10) selon l'une ou plusieurs des revendications précédentes, qui comporte une goulotte à câbles (1, 2, 3, 4, 5), **caractérisé par le fait que** l'extension dans la direction longitudinale (50) au moins de l'un des chemins de câbles (310, 320, 330) est au moins trois fois, de préférence au moins cinq fois plus longue, de façon particulièrement préférée au moins dix fois plus longue que la largeur de la base (313, 323, 333) au moins de l'un des chemins de câbles (310, 320, 330).

9. Phare de véhicule (10) selon l'une ou plusieurs des revendications précédentes, qui comporte une goulotte à câbles (1, 2, 3, 4, 5), **caractérisé par le fait que** les branches (311, 312, 321, 322, 331, 332) et la base (313, 323, 333) au moins de l'un des chemins de câbles (310, 320, 330) sont sensiblement de même longueur.

10. Phare de véhicule (10) selon l'une ou plusieurs des revendications précédentes, qui comporte une goulotte à câbles (1, 2, 3, 4, 5), **caractérisé par le fait qu'**au moins l'un des chemins de câbles (310, 320, 330) présente, dans les parois latérales (301, 302) qui sont formées par les branches (311, 312, 321, 322, 331, 332) avec leur extension dans la direction longitudinale (50) ou dans le fond (300) qui est formé par la base (313, 323, 333) avec son extension dans la direction longitudinale (50) dans le chemin de câbles respectif (310, 320, 330), des trous, des évidements, des languettes de fixation ou des variations dans l'épaisseur de paroi.

11. Phare de véhicule (10) selon l'une ou plusieurs des revendications précédentes, qui comporte une goulotte à câbles (1, 2, 3, 4, 5), **caractérisé par le fait que** le pont (318, 328) s'étend dans un plan qui se situe parallèlement au plan qui est formé dans la direction longitudinale (50) par la base (313, 323, 333) au moins de l'un des chemins de câbles (310, 320, 330) et son extension.

12. Procédé de fabrication d'un phare de véhicule (10) selon l'une des revendications 1 à 11, **caractérisé par le fait que** la goulotte à câbles (1, 2, 3, 4, 5) est obtenue à partir d'une matière plastique, en particulier partiellement ou entièrement à partir d'au moins une matière thermoplastique, de préférence un terpolymère thermoplastique ou un élastomère thermoplastique, et au moyen d'un procédé d'impression 3D et de préférence différentes matières sont utilisées pour lesdits au moins deux chemins de câbles (310, 320, 330) et ledit au moins un pont (318, 328).

13. Procédé de fabrication d'un phare de véhicule (10) selon l'une des revendications 1 à 11, **caractérisé par le fait que** la goulotte à câbles (1, 2, 3, 4, 5) est fabriquée à partir d'une matière plastique, de préférence d'un terpolymère thermoplastique et au moyen d'un procédé de moulage par injection.
